# FASCICULE DE BREVET EUROPEEN

(11) **EP 2 049 309 B1**
(45) Date de publication et mention de la délivrance du brevet: **13.01.2010**
(21) Numéro de dépôt: 07788010.2
(22) Date de dépôt: 27.07.2007
(51) Int. Cl.: B25J 17/00, E05D 1/02, B25J 13/08

(54) **MEMBRE ARTICULE C0MPORTANT DES FIBRES, ET STRUCTURE ARTICULEE ET ROBOT OU INTERFACE HAPTIQUE C0MP0RTANT UN TEL MEMBRE ARTICULE**
FASERN UMFASSENDES GELENKGLIED UND GELENKSTRUKTUR UND SOLCH EIN GELENKGLIED UMFASSENDE(R) ROBOTER ODER HAPTISCHE SCHNITTSTELLE
JOINTED LIMB COMPRISING FIBRES, AND JOINTED STRUCTURE AND ROBOT OR HAPTIC INTERFACE COMPRISING SUCH A JOINTED LIMB

(30) Priorité: 31.07.2006 FR 0653208
(43) Date de publication de la demande: 22.04.2009
(73) Titulaire: COMMISSARIAT A L'ENERGIE ATOMIQUE, 75015 Paris (FR)
(72) Inventeur: GOSSELIN, Florian, 92170 Vanves (FR)
(74) Mandataire: Ilgart, Jean-Christophe
(86) Numéro de dépôt international: PCT/EP2007/057796
(87) Numéro de publication internationale: WO 2008/015178

(56) Documents cités:
- FR-A- 2 775 927
- ARAI T ET AL: "Development of 3 DOF micro finger" INTELLIGENT ROBOTS AND SYSTEMS '96, IROS 96, PROCEEDINGS OF THE 1996 LEEE/RSJ INTERNATIONAL CONFERENCE ON OSAKA, JAPAN 4-8 NOV. 1996, NEW YORK, NY, USA,IEEE, US, vol. 2, 4 novembre 1996 (1996-11-04), pages 981-987, XP010212421 ISBN: 0-7803-3213-X
- "COMPLIANT PROSTHETIC OR ROBOTIC JOINT" NTIS TECH NOTES, US DEPARTMENT OF COMMERCE. SPRINGFIELD, VA, US, 1 mai 1990 (1990-05-01), page 425, XP000137392 ISSN: 0889-8464

## Description

### DOMAINE TECHNIQUE ET ART ANTÉRIEUR

La présente invention se rapporte à un membre articulé pour robot ou pour interface haptique et à des robots et à des interfaces haptiques mettant en oeuvre au moins un tel membre articulé.

La plupart des robots et des interfaces haptiques connus utilise une chaîne cinématique articulée constituée de plusieurs corps mobiles liés entre eux par des articulations reliant une base fixe à un ou des effecteur(s) dans le cas d'un robot manufacturier ou à un ou des préhenseur(s) saisi(s) par l'utilisateur dans le cas d'une interface à retour d'effort.

Ces chaînes poly-articulées permettent de contrôler la position et/ou l'orientation de l'organe terminal par rapport à la base.

Les articulations de la plupart des robots existants sont réalisées à base de roulements à billes ou de paliers lisses. Cette solution permet d'optimiser les performances de transmission des efforts tout en minimisant les jeux et les frottements. Cependant, ce type d'articulations met en oeuvre de nombreuses pièces mécaniques qui nécessitent un ajustement précis pour assurer le bon fonctionnement de l'articulation. Ces articulations sont donc complexes et coûteuses. Par ailleurs, elles sont généralement lourdes et encombrantes par rapport à la taille du robot.

En outre, dans le domaine des micro et méso technologies, ce type d'articulation à roulement à billes ou à paliers lisses peut difficilement être mis en oeuvre du fait de la taille des dispositifs réalisés dans ce domaine.

Afin de s'affranchir des problèmes de fabrication et d'assemblage à faible échelle, des articulations monoblocs ont été fabriquées. Ces articulations monoblocs sont faciles à réaliser et ne demandent aucun assemblage, elles représentent donc des solutions intéressantes d'un point de vue économique et, en outre, elles permettent d'éviter les défauts des structures articulées, notamment le jeu et l'usure.

Cependant, ce type d'articulation monobloc présente l'inconvénient d'avoir un déplacement limité. En outre, elles ne sont pas particulièrement adaptées à l'échelle macroscopique pour les robots, le rendement étant limité, puisque une partie de l'énergie sert à déformer l'articulation et elles ne sont pas non plus adaptées aux interfaces haptiques car les articulations se comportent comme des ressorts à multi degrés de liberté et donc offrent une résistance aux déplacements que l'on cherche à leur imposer. Ainsi, la réaction en retour n'est pas représentative des informations sur l'action effectuée par le dispositif commandé à distance.

Il a été proposé pour pallier à ces inconvénients de réaliser des articulations avec des zones amincies, offrant donc une moindre résistance au mouvement. Cependant, ces amincissements entraînent une fragilisation locale. Par ailleurs, les débattements restent limités car il faut rester dans le domaine élastique du matériau.

Il est également connu de l'article « Stiffness Influence Atlases of a Novel Flexure Hinge-based Parallel Mechanism with Large Workspace », Proceedings of the 2005 IEEE/RSJ International Conference on Intelligent Robot and Systems, 2-6 August 2005, Edmonton, Alberta, Canada, pp 796-801, un robot parallèle comportant six branches reliées à des actionneurs de base et à une plateforme mobile par des tiges en métal liées au corps adjacent par deux pièces vissées. Cependant, les tiges métalliques utilisées se comportent comme des ressorts et servent directement à transmettre des efforts. Par ailleurs, elles restent fragiles.

Il est également connu du document « Innovative Design of Robot and for Space Activities » L. Biagotti and Al, 8th ESA Workshop on Advanced Space Technologies for Robotics and Automation, « ASTRA 2004 », ESTEC - Noordwijk, The Nederlands, 2-4 November 2004, une main robotisée à articulations flexibles, les articulations étant formées par des ressorts spiraux qui offrent également une résistance au mouvement.

Le document « Development of DOF microfinger », ARAI and Al, in Intelligent Robots and System '96, IROS 96n, Porceedngs of the 1996 LEEE/RSJ International Conference on Osaka, Japan 4-8 nov. 1996, IEEE, vol. 2, page 91-97, sur lequel repose le préambule de la revendication 1, décrit une articulation mise en oeuvre dans des micromanipulateurs et micro-robots comportant deux éléments rigides reliés l'un à l'autre par deux câbles.

En conclusion, certaines articulations de la technique utilisent un assemblage de plusieurs composants pour assurer la mobilité d'une pièce par rapport à une autre. On obtient certes une articulation de qualité, cependant celle-ci est complexe, d'un poids et d'un encombrement important.

Il existe également des structures flexibles monoblocs qui n'utilisent qu'une seule pièce, cependant elles provoquent une résistance au mouvement à cause d'une rigidité non nulle autour de l'axe d'articulation considéré. Par ailleurs, le débattement est limité et elles souffrent d'une certaine fragilité.

Il existe également d'autres articulations, type à ressort, qui, elles, opposent une résistance au mouvement et donc ne sont pas adaptées aux interfaces haptiques.

Un autre inconvénient des articulations de robots ou d'interfaces haptiques est qu'elles intègrent rarement une mesure des déplacements. Cette mesure est en général déportée et effectuée au niveau des moteurs. Cette co-localisation des moteurs et de la mesure permet d'optimiser les réglages des asservissements. Cependant, les moteurs étant en général associés à des réducteurs pour accroître les niveaux d'efforts disponibles, la mesure sur un tour moteur ne permet pas de connaître au démarrage du robot les configurations de ses articulations car du fait de la démultiplication introduite par les réducteurs il existe plusieurs positions articulaires correspondant à chaque position du codeur disposé sur le moteur. Ainsi la mesure est relative et non absolue. Il en résulte qu'il est nécessaire d'initialiser le système en le plaçant dans une configuration de référence au démarrage permettant de recaler les mesures de déplacement relativement à cette configuration de départ. Cette procédure ralentit la mise en route du système et nuit donc à son ergonomie. Par ailleurs, les mesures étant effectuées au niveau des moteurs, les articulations passives (non motorisées) ne sont en général pas équipées de capteurs de position. Sur les robots parallèles, cette absence oblige à la résolution de modèles mathématiques complexes pour déterminer la position de l'organe terminal du robot en fonction des positions des articulations.

Le document FR 2 756 028 décrit un joint d'articulation automoteur et auto-verrouillant constitué d'une bande élastique pourvue d'une plaque de contrainte et d'une couche de matériau viscoélastique. Cette articulation est conçue pour permettre un passage entre deux positions stables et pour verrouiller l'articulation dans ces deux positions stables. Il s'agit d'une position stable pliée et d'une position stable dépliée. Mais cette articulation offre une résistance aux déplacements, elle n'est donc pas « transparente » et ne peut donc pas être appliquée aux interfaces haptiques.

Par ailleurs, ce type d'articulation ne permet pas de réaliser des articulations multi-positions puisque l'articulation décrite dans ce document ne permet que deux positions stables. En outre, elle n'intègre aucun moyen de mesure de la position de l'articulation, celle-ci mettant simplement dans l'une ou l'autre de ses positions stables.

C'est par conséquent le but de la présente invention d'offrir une articulation pour membres articulés de conception simple, permettant un grand débattement tout en offrant une solidité importante, et n'opposant qu'un faible effort de résistance lors de l'actionnement de l'articulation, et intégrant des moyens de mesure de sa déformation.

C'est également l'objet de cette invention de proposer l'utilisation de ce type d'articulation sur un robot ou une interface haptique, ce qui permet de s'affranchir de la phase d'initialisation du système en ayant une mesure absolue de la position des corps du robot en plus de la mesure relative des mouvements des moteurs, cette mesure étant obtenue pour les articulations actives et passives, ce qui simplifie les modèles des robots parallèles.

### EXPOSÉ DE L'INVENTION

Le but précédemment énoncé est obtenu grâce à une articulation composite réalisée dans un matériau différent des segments réalisés en un matériau rigide, qu'elle relie et qu'elle articule l'un par rapport à l'autre. Le matériau de l'articulation est choisi pour sa souplesse permettant ainsi de minimiser la résistance aux mouvements et sa solidité.

Le matériau choisi est un matériau fibreux. Ce type de matériau n'offre qu'une très faible résistance aux mouvements, une grande solidité, notamment dans le sens des fibres. Par ailleurs, il est facile à fabriquer et facile à assembler, avec les segments du membre à réaliser.

En d'autres termes, le membre comportant l'articulation selon la présente invention est réalisé en séparant dans l'espace les propriétés des matériaux. C'est-à-dire que le membre flexible est composite, puisqu'il comporte plusieurs matériaux distincts dans l'espace, les segments du membre sont réalisés dans un matériau rigide, tandis que l'articulation en elle-même est réalisée dans un matériau flexible.

Par ailleurs, l'articulation intègre des éléments de mesure de la déformation du matériau fibreux qui sont localisés dans l'articulation elle-même entre les corps rigides que lie la liaison.

La réalisation de l'articulation elle-même en matériau fibreux, type câble, ou matériau tissé ou matériau non tissé permet une grande transparence d'efforts autour de l'axe d'articulation, c'est-à-dire que cette articulation offre une très faible résistance aux mouvements et pas ou peu de raideur ni d'amortissement, tout en offrant une très grande solidité.

Les éléments de mesure eux-mêmes sont réalisés dans un matériau souple de type fibre, polymère ou caoutchouc de manière à permettre la mesure sans opposer de résistance au mouvement et en conservant à l'articulation sa transparence.

Selon la présente invention, l'articulation et les moyens de mesure sont fixés dans les segments du membre, ce qui offre une grande simplicité de réalisation, une grande compacité et une grande solidité de liaison entre les deux segments du membre articulé.

La fixation à l'intérieur des segments a principalement deux avantages. Premièrement, l'axe de l'articulation se trouve dans le plan milieu du matériau fibreux qui se plie donc autour de ses fibres neutres, ce qui offre une moindre résistance. Si elle était fixée à l'extérieur, il faudrait deux bandes de matériau fibreux sur chacune des deux faces des segments adjacents pour obtenir une solidité équivalente dans les deux directions, l'utilisation d'une seule bande sur une des faces des segments risquant de privilégier une direction. Dans ces conditions, compte tenu du fait que les segments adjacents ne peuvent pas être complètement pointus, les bandes fibreuses passeraient plus loin de l'axe de l'articulation, ce qui obligerait une plus grande longueur libre pour pouvoir assurer le mouvement de l'articulation, donc plus de mouvements parasites dans les autres directions. Deuxièmement, cette disposition accroît la solidité de l'articulation car il est plus difficile d'arracher la bande fibreuse du milieu des segments que de leur périphérie.

Enfin, la fixation des éléments de mesure dans l'articulation permet de déterminer ses mouvements dans un design très compact.

Cette fixation peut être obtenue en moulant autour de l'articulation fibreuse et des moyens de mesure les segments du membre articulé ou en fixant par pincement ou serrage les extrémités de l'articulation fibreuse et des moyens de mesure dans les segments du membre articulé. L'une ou l'autre des solutions sera choisie en fonction du matériau utilisé pour réaliser les segments. Par ailleurs, on peut envisager, afin d'améliorer encore la solidité de la liaison, d'effectuer un moulage et de venir confirmer la fixation avec des inserts pénétrant dans des boucles formées par le matériau fibreux.

Les matériaux fibreux peuvent être par exemple des câbles, l'articulation pouvant comporter un ou plusieurs câbles suivant le nombre de degrés de liberté que l'on souhaite donner à l'articulation, et suivant la solidité de liaison entre les deux segments.

Les éléments de mesure peuvent par exemple être deux électrodes fines déposées sur un élément fin en polymère flexible dont la déformation conduira à une variation de la distance entre les électrodes, donc de la résistance ou de la capacité du dispositif. Ce principe est connu de l'homme de l'art et est utilisé par exemple dans les Pads des ordinateurs portables. Il ne sera donc pas détaillé. Les éléments de mesure peuvent aussi être constitués d'un matériau plastique souple chargé de particules métalliques ou d'un polymère conducteur dont la résistance varie en fonction de sa déformation. Ils peuvent encore être réalisés à l'aide d'une ou plusieurs fibres optiques associées à un émetteur lumineux (diode) et dont la capacité à transmettre la lumière sera modifiée par la courbure qui sera donc indirectement détectée et mesurée par un photodétecteur.

L'articulation peut être réalisée idéalement en matériau tissé ou en matériau non tissé, réalisé par la cohésion de fibres disposées de manière ordonnée ou non.

L'ordonnancement des fibres, notamment dans le cas des câbles, des matériaux tissés et des matériaux non tissés avec alignement des fibres, les fibres étant orientées dans la direction de l'alignement des deux segments, permet d'augmenter la tenue en traction entre les deux segments

La présente invention a alors principalement pour objet un membre articulé pour robot ou interface haptique selon le revendication 1.

Ce membre articulé est de réalisation simple et robuste, offre un grand débattement et très peu d'effort résistant lors de l'articulation du premier segment par rapport au deuxième segment, ainsi dans le cas d'une mise en oeuvre dans une interface haptique le ressenti est de très bonne qualité.

Dans un exemple de réalisation, l'articulation comporte au moins deux câbles, parallèles entre eux, dont une plus grande dimension est orthogonale à l'axe de rotation de l'articulation, les câbles étant sollicités en flexion. L'articulation comporte également un élément de mesure de l'angle qu'elle forme, cet élément de mesure pouvant apparaître sous forme de fibre (optique par exemple) ou d'une fine feuille de matériau souple intégrant des électrodes ou des particules métalliques de manière à ce que sa résistance ou sa capacité varie en fonction de la courbure de l'articulation. Cet élément de mesure peut être placé à côté des câbles ou au milieu de ceux-ci. Cette articulation présente l'avantage d'être d'une réalisation très simple et d'offrir une très grande durée de vie, en outre elle bénéficie de la grande souplesse en flexion des câbles. Par ailleurs, le prix de revient est très faible relativement aux articulations de l'art antérieur.

Dans un autre exemple de réalisation, l'articulation peut comporter un seul câble apte à permettre un rotulage entre les premier et deuxième segments. Ainsi de manière simple, une liaison rotule est réalisée sans nécessiter un ajustement précis entre deux pièces.

Dans un autre exemple, l'articulation peut être du type à cardan, comportant un croisillon dont les extrémités d'une première branche sont articulées au moyen d'un câble sur deux branches de premier segment et dont les extrémités d'une deuxième branche sont articulées au moyen d'un câble sur deux branches du deuxième segment.

Dans un autre exemple de réalisation, l'articulation peut comporter un câble dont une plus grande dimension du câble s'étend le long de l'axe de rotation de l'articulation, ainsi le câble est sollicité en torsion. Dans ce cas, on pourra choisir comme éléments de mesure un fil de matériau flexible (polymère, nylon, ...) colinéaire ou parallèle et à proximité du câble d'articulation et dont les caractéristiques physiques varient en fonction de sa torsion s'il est colinéaire à l'articulation ou de son allongement s'il est parallèle et légèrement décalé. Le polymère peut par exemple être chargé en particules métalliques, éventuellement de manière inhomogène et dans des directions privilégiées, de telle sorte que sa résistance varie en fonction de ses déformations donc du mouvement de l'articulation.

L'articulation peut également comporter une nappe de fibres. Avantageusement, cette nappe comporte des fibres tissées, ce qui la rend plus résistante. Dans ce cas comme sur la réalisation à base de fils, les éléments de mesure peuvent être placés à côté de la nappe de fibres ou être intégrés directement à celle-ci.

Par ailleurs, les fibres peuvent être noyées dans la matière des segments. La fabrication d'un membre articulé selon la présente invention est donc très simple.

Avantageusement, il peut être prévu que les extrémités de l'articulation noyées dans la matière comportent des boucles à travers lesquelles la matière passe afin d'améliorer la résistance mécanique de l'attache de l'articulation dans les segments.

On peut également prévoir que des axes traversent les boucles et soient également noyés dans la matière.

Dans une autre variante, l'articulation est fixée par serrage dans les segments, ce qui la rend démontable.

De manière très avantageuse, les extrémités des segments en regard sont biseautées, augmentant le débattement angulaire entre les segments.

Les fibres des articulations sont par exemple en aramide, en kevlar ou en polypropylène, ce qui leur confère une très bonne tenue mécanique.

Le membre articulé selon la présente invention peut également comporter des moyens d'actionnement d'un des segments par rapport à l'autre, lesdits moyens d'actionnement associant par exemple un moteur et un réducteur à engrenage ou cabestan à câble. Les moyens d'actionnement peuvent être munis de leurs propres moyens de mesure comme par exemple un potentiomètre ou un codeur optique.

La présente invention a également pour objet une structure articulée comportant une base munie de deux extrémités, un support mobile monté articulé sur la base, le support formant avec la base un membre articulé selon la présente invention, un parallélogramme articulé comportant un bras, une bielle parallèle au bras et des première et deuxième biellettes parallèles, le bras étant articulé sur le support mobile, le bras et le support mobile formant un membre articulé selon la présente invention, la première biellette étant articulée sur le bras et la bielle, le bras et la première biellette, la bielle et la première biellette formant respectivement des membres articulés selon la présente invention et la deuxième biellette étant articulée sur la bielle et le bras, la deuxième biellette et le bras formant un membre articulé selon la présente invention et la deuxième biellette et la bielle formant un membre articulé selon la présente invention, la deuxième biellette se prolongeant de manière à former un avant bras de manoeuvre.

La présente invention a également pour objet un robot ou interface haptique comportant au moins un membre articulé selon la présente invention.

La présente invention a également pour objet un robot ou interface haptique comportant deux structures selon la présente invention, disposées tête-bêche, de manière à ce que les extrémités libres des deux avant bras de manoeuvre soient en vis-à-vis et sur lesquelles est articulé un élément formant un membre articulé selon la présente invention.

La présente invention a également pour objet un robot ou interface haptique comportant deux structures selon la présente invention, disposées côte à côte, les extrémités libres des deux avant bras de manoeuvre étant articulées sur un élément formant un membre articulé selon la présente invention.

La présente invention a également pour objet un robot ou interface haptique comportant trois structures selon la présente invention, réparties angulairement autour d'un axe préférentiellement de manière régulière, les extrémités des avant bras étant toutes orientées d'un même côté et portant une plateforme, qui peut former avec les extrémités des avant bras des membres articulés selon la présente invention.

La présente invention a également pour objet un robot ou interface haptique comportant une base, sur laquelle sont disposés de manière mobile trois supports tournant autour de trois axes répartis angulairement de manière régulière, chaque support formant avec la base un membre articulé selon la présente invention, ledit robot comportant trois premiers segments articulés sur les supports mobiles, formant avec ceux-ci des membres articulés selon la présente invention, trois deuxièmes segments articulés par une première extrémité respectivement sur les trois premiers segments, lesdits deuxièmes segments formant avec lesdits premiers segments des membres articulés selon la présente invention, lesdits deuxièmes segments portant à leur deuxième extrémité une plateforme, qui peut être formée avec les deuxièmes extrémités des deuxièmes segments des membres articulés selon la présente invention.

La présente invention a également pour objet un robot ou interface haptique comportant deux structures ou trois structures selon la présente invention, disposées sur une base commune fixée au dos de la main, de manière à ce que les extrémités libres des deux avant bras de manoeuvre soient manipulées avec les extrémités de deux ou trois doigts.

### BRÈVE DESCRIPTION DES DESSINS

La présente invention sera mieux comprise à l'aide de la description qui va suivre et des dessins en annexe, sur lesquels :
- la figure 1A est une vue en perspective d'un premier exemple d'un premier mode de réalisation d'un membre articulé selon la présente invention dont l'articulation est sollicitée en flexion,
- les figures 1B à 1D sont des variantes de l'articulation de la figure 1A,
- la figure 2A est une variante du membre articulé de la figure 1,
- les figures 2B à 2D sont des variantes de l'articulation de la figure 2A,
- les figures 3A1 à 3A6 et 3B1 à 3B6 sont des vues en perspective d'un deuxième exemple de réalisation d'un membre articulé selon la présente invention,
- les figures 4A et 4B sont des vues en perspectives de variantes de réalisation du membre des figures 3A1 à 3A6 et 3B1 à 3B6 respectivement,
- les figures 5A à 5D sont des vues en perspective d'un deuxième mode de réalisation,
- les figures 6A et 6B sont des vues en perspective d'une variante du deuxième mode de réalisation,
- la figure 7 est une vue en perspective d'un cardan selon la présente invention,
- les figures 8 et 9 sont des vues en perspective d'un exemple d'actionneur d'un membre articulé selon la présente invention,
- la figure 10 est une vue en perspective d'un exemple de réalisation d'un membre à double articulation selon la présente invention,
- la figure 11 est une vue en perspective d'un exemple de structure mettant en oeuvre des membres articulés selon la présente invention,
- la figure 12 est une structure identique à celle de la figure 11 à laquelle ont été ajoutés des actionneurs,
- la figure 13 est une vue en perspective d'un premier exemple de robot mettant en oeuvre deux structures de la figure 12,
- la figure 14 une vue en perspective d'un deuxième exemple de robot mettant en oeuvre deux structures de la figure 12,
- la figure 15 une vue en perspective d'un autre exemple de robot mettant en oeuvre trois structures de la figure 12,
- la figure 16 est une vue en perspective d'un autre exemple de réalisation d'un robot mettant en oeuvre des membres articulés selon la présente invention,

la figure 17 est une vue en perspective d'une variante de la structure de la figure 12,
la figure 18 est une vue en perspective d'un exemple d'interface portable mettant en oeuvre des membres articulés selon la présente invention.

### EXPOSÉ DÉTAILLÉ DE MODES DE RÉALISATION PARTICULIERS

Dans toute la description, les mêmes références seront utilisées pour désigner les éléments remplissant la même fonction.

Les termes « horizontal », « vertical », « au dessous de », ... ne seront pas limitatifs puisque les dispositifs décrits peuvent être disposés suivant n'importe quelle orientation dans l'espace.

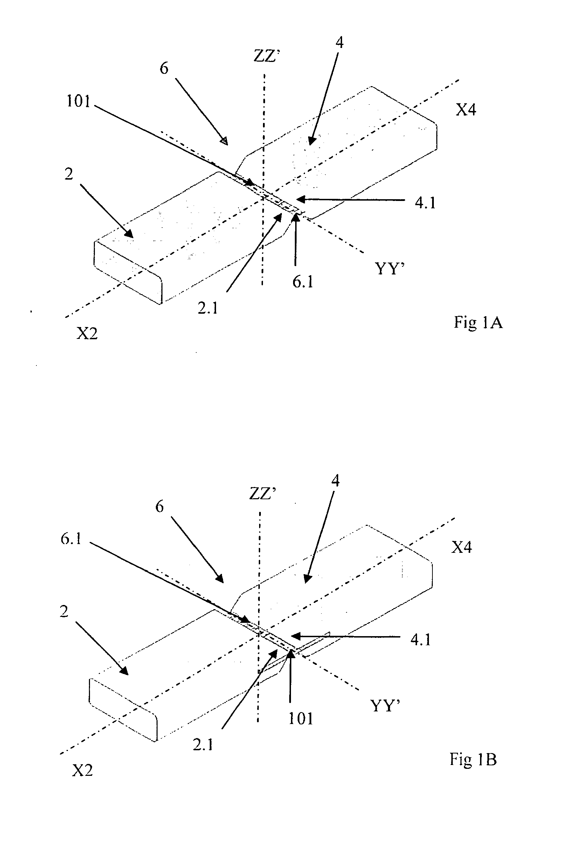

Sur la figure 1A on peut voir un premier exemple de réalisation d'un membre selon la présente invention, comportant un premier segment 2 et un deuxième segment 4 rigides, d'axes respectifs X2 et X4, reliés de manière à ce que leurs bases soient sensiblement alignées par une articulation 6.

L'articulation 6 dans ce premier mode de réalisation comporte une pluralité de câbles 6.1 disposés dans le sens de leur longueur selon la direction des axes X2 et X4.

Dans ce mode de réalisation, l'articulation comporte cinq câbles 6.1, mais un nombre plus important ou un nombre inférieur de câbles peut être utilisé suivant la taille des segments et suivant la résistance de liaison recherchée entre les deux segments.

Selon la présente demande, un câble est un cordage de fibres métalliques, de fibres naturelles ou synthétiques, qui est formé par un assemblage de torons. Les torons pouvant eux-mêmes être enroulés autour d'une âme.

Les câbles peuvent être réalisés en acier, en aramide, en kevlar, en polypropylène ou en tout autre matériau apte à offrir les résistances mécaniques recherchées pour une telle articulation et une grande tenue à la fatigue.

L'articulation comporte également un élément de mesure 101 qui se présente sous la forme d'un film flexible mince. Cet élément de mesure peut par exemple être composé de deux électrodes fines déposées sur un élément fin en polymère flexible dont la déformation conduira à une variation de la distance entre les électrodes, donc de la résistance ou de la capacité du dispositif. Il peut également être formé à partir d'un matériau plastique ou polymère conducteur (chargé de particules métalliques par exemple) souple dont la résistance varie en fonction de sa déformation. Ces principes sont connus de l'homme de l'art et ne seront pas détaillés ici. On ne présentera pas en particulier les éléments de traitement électroniques et informatiques de signaux représentatifs de la résistance ou de la capacité du dispositif et qu'il faut traiter pour reconstruire une image de la déformation du matériau donc de l'angle de l'articulation. Par souci de simplification, ces éléments ainsi que les éléments d'alimentation et de câblage des éléments de mesure ne seront pas représentés.

Dans ce mode de réalisation, les extrémités longitudinales des câbles et des éléments de mesure sont noyées dans le matériau formant les segments 2 et 4. Ceci est obtenu lors du moulage des segments 2 et 4 en mettant en place les câbles 6.1 et l'élément de mesure 101 et son câblage (non représenté) dans les moules.

Les câbles ont une grande rigidité axiale et une grande souplesse en flexion et en torsion, ils permettent alors un mouvement significatif en rotation autour d'un axe YY' perpendiculaire aux axes X2 et X4 tout en bloquant les autres mouvements. Par ailleurs, leur fixation est beaucoup plus simple que celle des paliers lisses ou des roulements utilisés dans l'état de la technique, puisqu'il suffit par exemple de les noyer dans la masse du matériau formant un segment.

L'élément de mesure est très compact et très souple et n'offre pas de résistance aux mouvements de l'articulation. Il permet à tout moment de connaître la position de l'articulation. Les câbles sont placés sur les côtés de l'élément de mesure pour accroitre la résistance de l'articulation, en particulier aux mouvements parasites autres que la rotation autour de l'axe YY'.

La figure 1B présente une variante de ce mode de réalisation. Sur cette figure, l'élément de mesure 101 est placé d'un côté des corps rigides 2 et 4 tandis que les câbles 6.1 sont placés de l'autre côté. Cette configuration peut être retenue pour faciliter l'intégration des câbles et de l'élément de mesure.

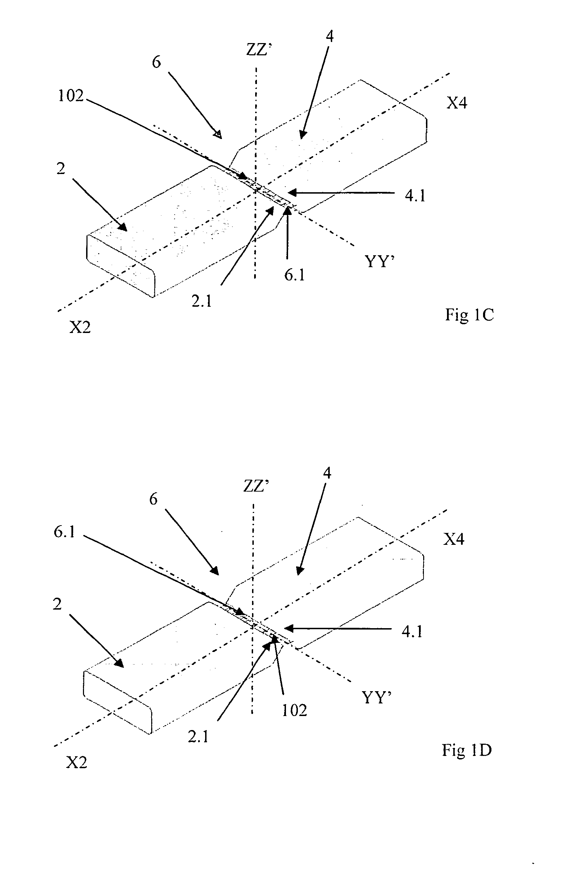

La figure 1C présente une autre variante de réalisation de l'articulation de la figure 1. Ici l'élément de mesure 102 se présente sous la forme de fils flexibles. Il peut toujours être constitué de polymère conducteur ou de matériau souple chargé de particules métalliques dont la résistance varie en fonction des mouvements de l'articulation. Il peut également être constitué d'une ou plusieurs fibres optiques associées à un émetteur (par exemple une diode) et un récepteur (par exemple une photodiode). Dans ce cas, la quantité de lumière transmise à travers la fibre varie en fonction de sa courbure et la mesure de la quantité de lumière reçue par le récepteur donne une image de l'angle de l'articulation. Ce type de dispositif est également connu de l'homme de l'art et ne sera pas détaillé dans ce document. En particulier, les fils et circuits électriques et électroniques liés à l'alimentation de la source lumineuse et au transport des signaux du récepteur ne seront pas représentés sur la figure 1C.

La figure 1D présente une variante de réalisation du dispositif de la figure 1c ou l'élément de mesure 102 est placé à côté des câbles 6.1 pour faciliter le montage du dispositif.

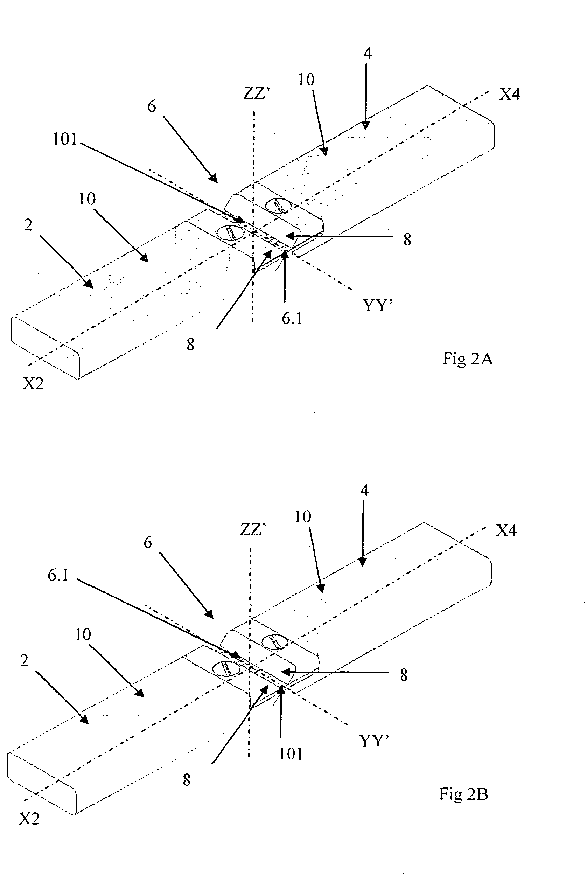

On peut également envisager de pincer les câbles et les éléments de mesure entre deux éléments formant chaque segment, comme cela est représenté dans les figures 2A à 2D.

Sur les figures 2A à 2D, chaque segment comporte, au niveau de son extrémité destinée à être raccordée à l'autre segment, une plaquette 8 qui va être fixée sur un corps principal 10 du segment (par exemple au moyen d'une vis), les extrémités des câbles 6.1 et l'élément de mesure 101, 102 étant alors pincées entre le corps principal 10 et la plaquette 8 (ici encore, par souci de clarté, le câblage électrique et électronique ou optique ainsi que les circuits et éléments électroniques et informatiques d'alimentation et de traitement des éléments de mesure 101, 102 ne sont pas représentés sur les figures 2a à 2d.).

On peut également envisager lors du moulage que le câble comporte à ses extrémités des boucles formant des oeillets, afin d'assurer un ancrage solide dans la matière. On pourra également prévoir d'introduire des pièces métalliques, par exemple des goupilles, pour pénétrer dans ce type de boucle afin de réaliser un ancrage dans la matière.

Dans le cas du pincement des extrémités des câbles, on pourra prévoir de travailler l'état de surface du corps principal et de la plaquette de manière à augmenter le frottement, par exemple par grenaillage ou par matriçage. On pourra également prévoir localement des empreintes adaptées de manière à ce que les pièces 8 et 10 ne viennent pas blesser ou endommager les éléments de mesure.

La distance entre les deux extrémités 2.1 et 4.1 des segments destinées à être reliées est optimisée, de manière à permettre un mouvement de rotation autour de l'axe YY' en évitant le plus possible un contact entre les deux extrémités 2.1 et 4.1. Ainsi, la longueur du câble entre les deux segments est non nulle et est déterminée de manière à éviter des mouvements parasites de translation le long de l'axe YY', le long des axes X2 et X4 et le long d'un axe ZZ', et également des mouvements de rotations autour des axes X2 et X4 et ZZ'. L'axe ZZ' est orthogonal aux axes X2 et X4 et YY'.

Par ailleurs, il pourra être prévu pour éviter une interférence entre les extrémités 2.1 et 4.1 des segments de réaliser un profil de ces extrémités 2.1 et 4.1 en biseau. Ainsi, lors d'un pliage important de l'articulation, les extrémités 2.1 et 4.1 ne viendront pas en contact, ou alors seulement lorsque les deux segments 2, 4 formant un angle significatif. Par exemple, dans le cas d'un biseau à 45°, les segments 2 et 4 ne viendront en contact au plus tôt que lorsque ceux-ci seront orientés l'un par rapport à l'autre selon un angle de 90°.

Le profil des extrémités 2.1 et 4.1 vu de côté peut être triangulaire ou en pointe. L'angle de la pointe sera choisi de manière à offrir une résistance suffisante aux efforts, ce qui requiert suffisamment de matière autour des câbles. Par ailleurs, un profil trop pointu pourrait également être coupant et donc détériorer les câbles et les éléments de mesure.

La distance entre les corps 2 et 4 ainsi que le profil des extrémités 2.1 et 4.1 auront une influence sur la déformation des câbles et des éléments de mesure 101, 102. Ces derniers en particulier pourront être calibrés en fonction de ces paramètres de manière à optimiser la qualité de la mesure de l'angle de l'articulation (identification de paramètres de mesure, utilisation de courbes de références ou d'abaques, ...).

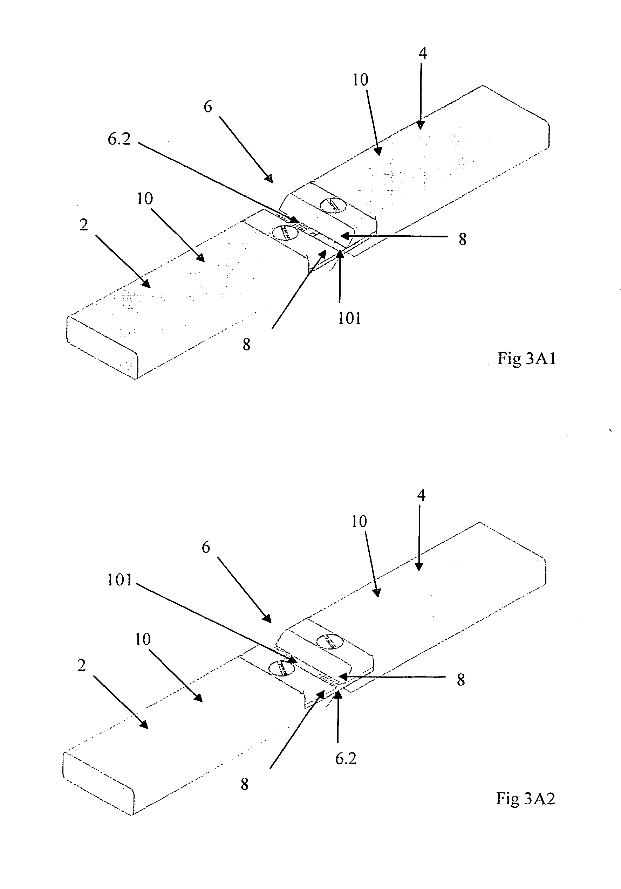

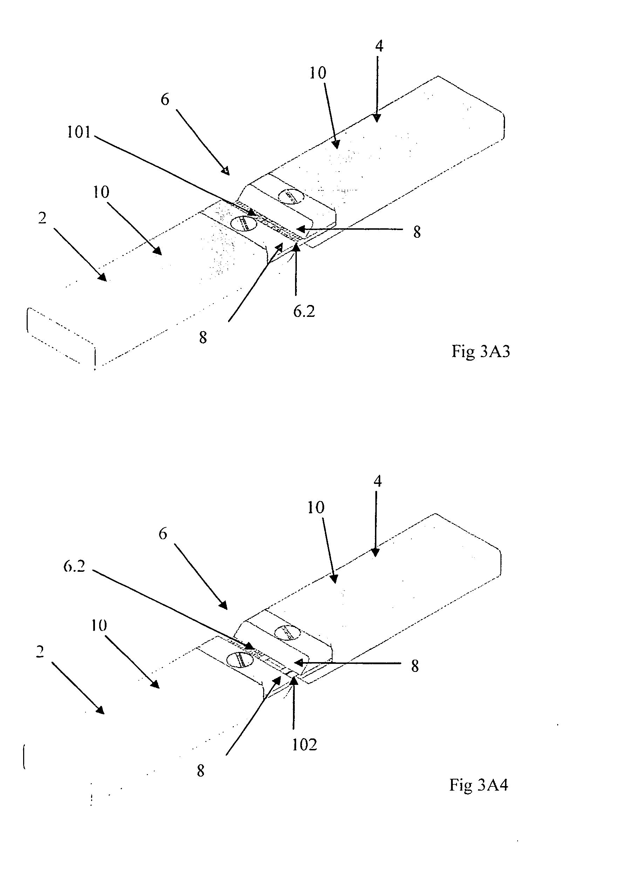

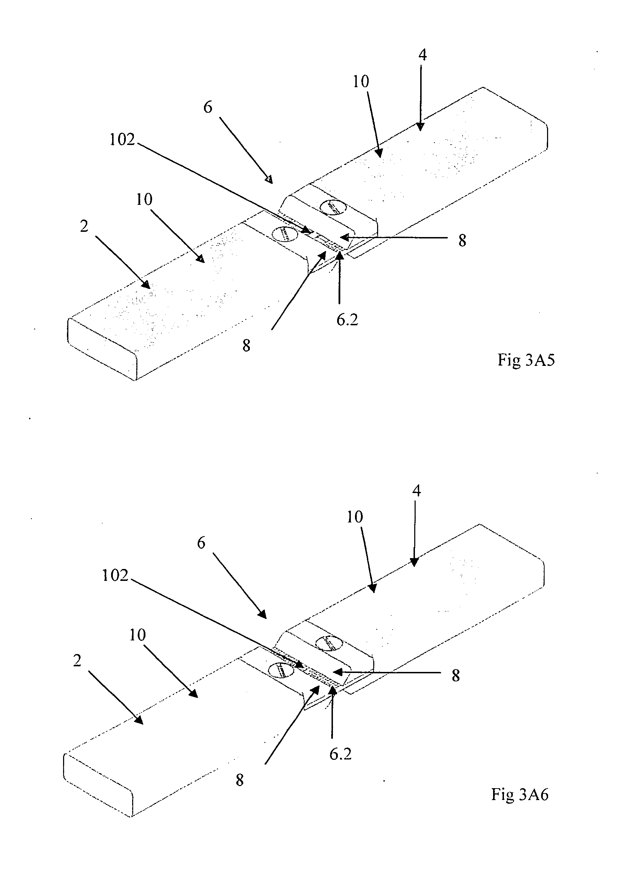

Sur les figures 3A1 à 3A6 et 3B1 à 3B6, on peut voir un deuxième exemple de réalisation d'un membre articulé suivant la présente invention.

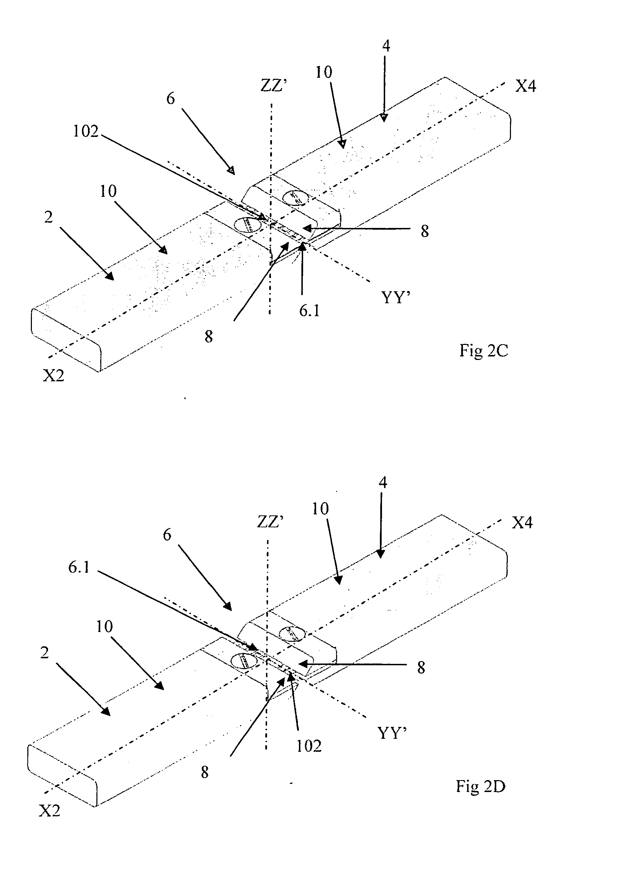

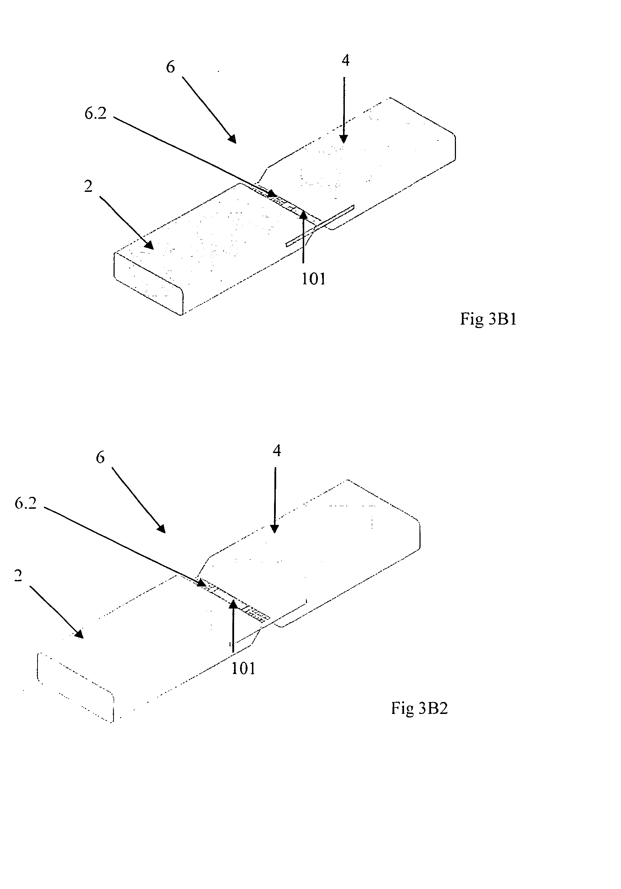

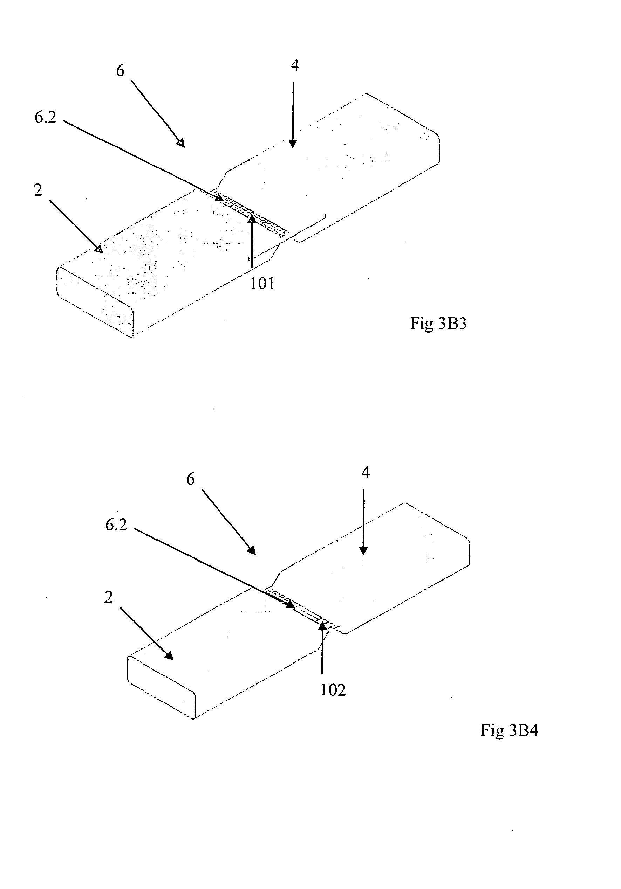

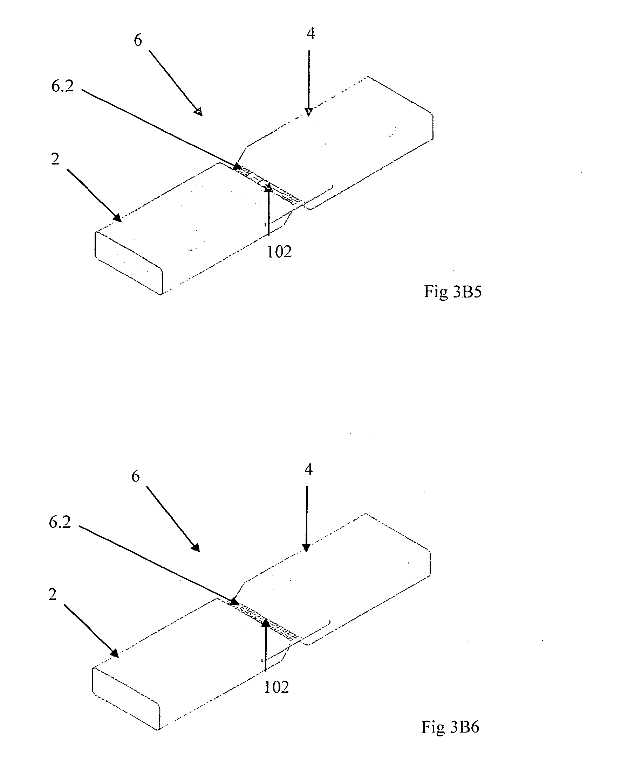

Ce mode de réalisation diffère du premier mode de réalisation représenté aux figures 1 et 2 en ce que l'articulation 6 est obtenue à partir d'une nappe de matériau fibreux fixée sur chacun des segments 2, 4 du membre articulé. Comme pour un câble, cette fixation peut être obtenue par moulage (figures 3B1 à 3B6) ou par serrage (figures 3A1 à 3A6). Le matériau fibreux qui forme l'articulation 6 peut être de type tissé, c'est-à-dire qu'il est obtenu par tissage de fils de trame et de fils de chaîne, il offre donc une résistance importante selon l'axe du fil de trame et selon l'axe du fil de chaîne.

La nappe de matériau fibreux peut également être formée par du matériau non tissé, dans ce cas, il est fait d'un voile ou d'une nappe de fibres individuelles orientées directionnellement ou au hasard, liées notamment par friction et/ou cohésion et/ou adhésion.

De manière avantageuse, l'orientation des fibres permet de déterminer une direction privilégiée de résistance à la traction.

La nappe 6.2 de matériau fibreux pourra avantageusement être percée au niveau de ses extrémités destinées à être maintenues dans les segments 2 et 4, des oeillets métalliques pourraient être ajoutés dans les perçages afin d'augmenter encore la résistance et on pourrait encore prévoir comme pour les câbles l'insertion d'éléments métalliques afin de renforcer la résistance à la traction.

Dans le cas du moulage, la nappe de matériau pourra être ajourée, ce qui permettra aux matériaux réalisant les segments de traverser la nappe de matériau fibreux, et donc d'améliorer la tenue du membre articulé.

La nappe de matériau fibreux peut être un tissu de fibre d'aramide, de fibre de carbone ou de fibre de verre, il peut également s'agir d'un matériau tissé imprégné ou enrobé, type ruban armé en polypropylène, en polyester ou en matériau textile.

L'élément de mesure peut se présenter sous forme d'un film 101 ou d'un ou plusieurs fils ou fibres 102. Il peut être placé à côté de la nappe 6.2 de matériau fibreux comme sur les figures 3A1 (resp. 3B1) et 3A4 (resp. 3B4). On peut également placer deux nappes de matériau fibreux 6.2 de part et d'autre de l'élément de mesure 101, 102 pour augmenter la résistance de l'articulation aux mouvements parasites comme sur les figures 3A2 (resp. 3B2) et 3A5 (resp. 3B5). Enfin, on peut noter l'élément de mesure 101, 102 au coeur des fibres du matériau fibreux comme sur les figures 3A3 (resp. 3B3) et 3A6 (resp. 3B6). Dans le cas d'un matériau tissé, on pourra par exemple placer l'élément de mesure entre deux couches tissées.

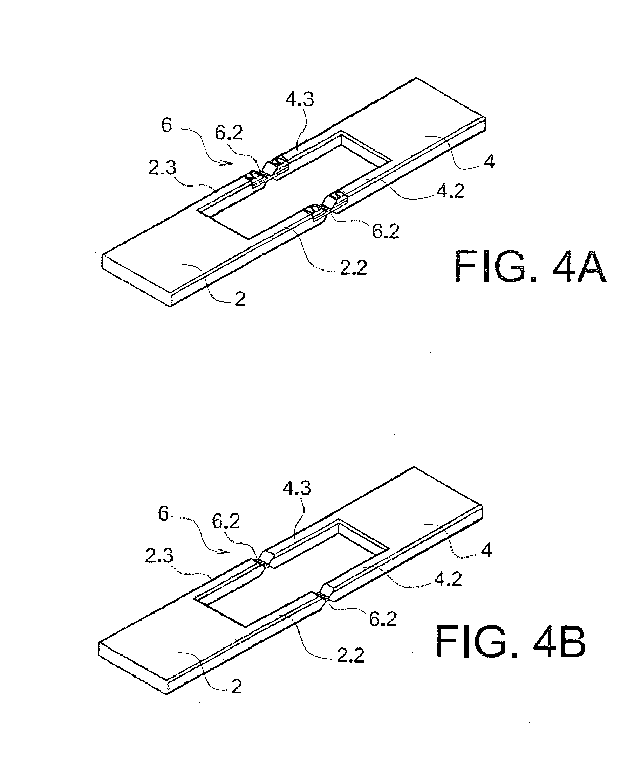

Sur les figures 4A et 4B, on peut voir un deuxième mode de réalisation d'un membre articulé selon la présente invention (par souci de clarté des figures, les éléments de mesure 101, 102 ne sont pas représentés sur les figures 4A et 4B mais ils font partie ici aussi du dispositif). Dans ce cas, l'articulation est de type double. Chacun des segments 2 et 4 a sensiblement une forme en U, les branches des U 2.2, 2.3, 4.2, 4.3 respectivement étant destinées à être raccordées par leur extrémité libre au moyen d'une articulation selon la présente invention. Dans la variante représentée, il s'agit d'une articulation 6.2 réalisée à l'aide d'une nappe de matériaux fibreux, maintenue par serrage (figure 4A) ou par moulage (figure 4B). On pourra également utiliser un ou plusieurs câbles pour relier chacune des extrémités libres du U du segment 2 à l'extrémité libre en regard du U du segment 4.

Ce type d'articulation double permet d'augmenter la solidité du membre articulé.

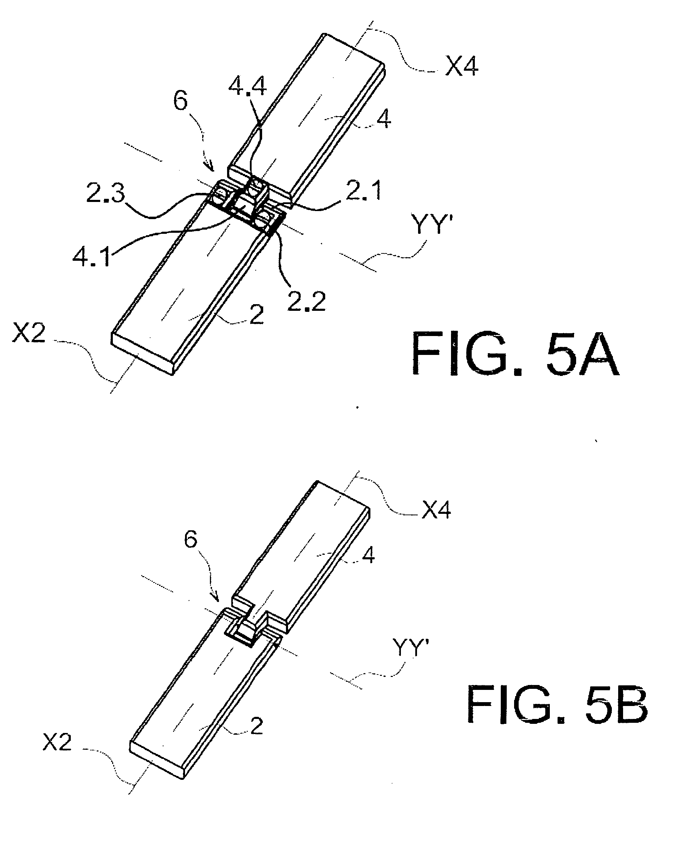

Sur les figures 5A et 5B, on peut voir une autre variante de réalisation d'un membre articulé selon la présente invention, dans lequel cette fois-ci le matériau fibreux et l'élément de mesure sont sollicités en torsion et non en flexion.

Sur la figure 5A, on peut voir le premier segment 2 comportant une extrémité 2.1 destinée à être reliée au deuxième segment 4, cette extrémité 2.1 a sensiblement la forme d'un U. Le deuxième segment 4, quant à lui, comporte, au niveau de son extrémité 4.1, une partie en saillie 4.4 destinée à être disposée entre les deux branches 2.2 et 2.3 du U de l'extrémité 2.1 du segment 2. L'articulation 6 selon la présente invention est alors fixée à la branche 2.2 à la partie en saillie 4.4 du segment 4 et à la deuxième branche 2.3 du segment 2.

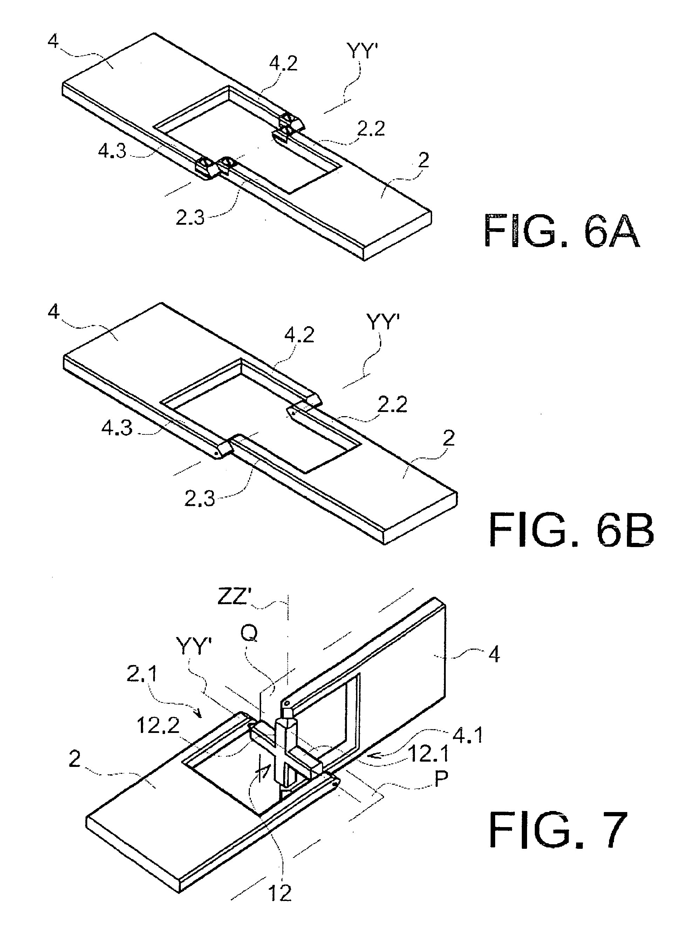

L'articulation selon la présente invention s'étend donc transversalement par rapport aux axes X2 et X4 des segments 2 et 4, et parallèlement à l'axe de rotation YY'. Cette disposition permet des débattements plus importants. Les débattements ne sont limités que par les capacités du fil et de l'élément de mesure en torsion et par la forme des segments adjacents. Sur les figures 3A et 3B, les débattements sont de l'ordre de 90° ; ils pourraient être plus importants avec des segments plus pointus, elles atteignent plus de 180° sur les figures 5A et 5B et plus de 300° sur les figures 6A et 6B comme nous le verrons par la suite).

Le mode de fixation de l'articulation selon la présente invention aux segments 2 et 4 peut être comme précédemment obtenu par serrage (figure 5A) ou par moulage (figure 5B).

Les extrémités des segments 2 et 4 en regard sont configurées de manière à éviter une interférence, ou pour le moins à réduire le risque d'interférences, notamment en réalisant des formes en biseau.

De manière avantageuse, cette variante de réalisation est réalisée avec une articulation sous forme de câble, un ou plusieurs câbles peuvent être prévus.

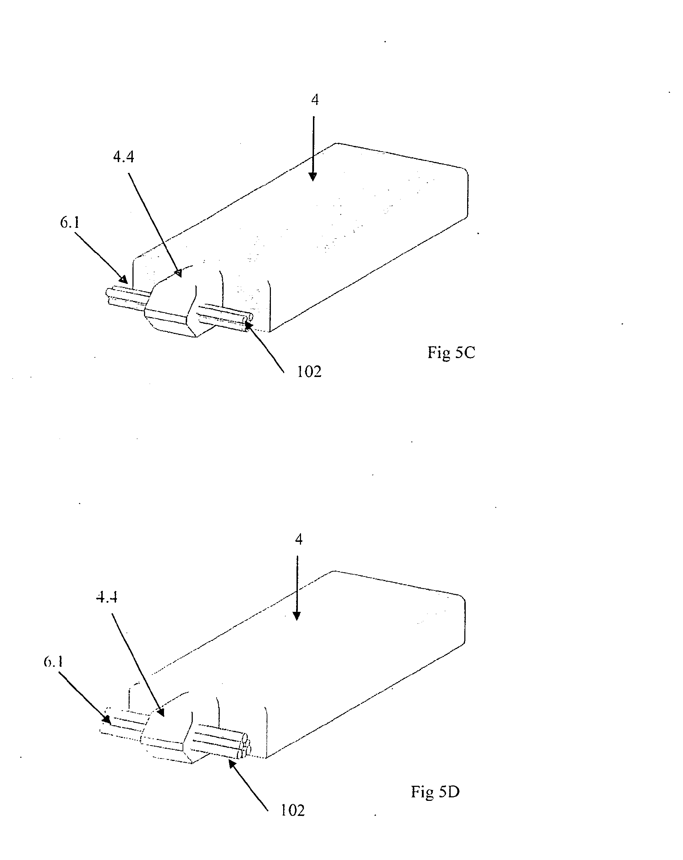

Sur la figure 5C, on peut voir le segment 4 seul avant son assemblage avec le segment 2. On peut voir l'articulation à câbles 6.1 et un ou plusieurs éléments se présentant sous la forme de fils 102 fixés dans la partie 4.4 en saillie. Dans ce cas, les câbles 6.1 et les éléments de mesure 102 comprenant plusieurs câbles sont disposés dans le moule lors du moulage du segment 4 (comme précédemment, on ne représente pas par souci de lisibilité sur les figures 5C et 5D les circuits de câblage électrique et les cartes électroniques de traitement de éléments de mesure).

On pourra choisir ici comme éléments de mesure 102 un fil de polymère conducteur ou un fil de matériau flexible (polymère, nylon, ...) chargé de particules métalliques et colinéaire à l'axe d'articulation et dont les caractéristiques physiques (résistance) varient en fonction de sa torsion (figure 5C). On pourra également placer un ou plusieurs fils à proximité et en parallèle de l'articulation. Dans ce cas l'angulation de l'articulation fera varier la longueur des fils dont on pourra détecter par exemple une variation de résistance image de l'angle.

Afin de réaliser un membre tel que celui de la figure 5B, on réalise par exemple au préalable le segment 4 tel que représenté à la figure 5C ou la figure 5D, puis on dispose des extrémités libres des câbles 6.1 et des éléments de mesure 102 à l'intérieur du moule du segment 2 au niveau des branches 2.2, 2.3.

Sur les figures 6A et 6B on peut voir une variante de réalisation d'un membre articulé selon la présente invention, ce membre se rapproche de celui représenté aux figures 4A et 4B. Dans cette variante, le ou les câbles sont disposés parallèlement à l'axe de rotation de manière similaire au mode de réalisation représenté sur les figures 5A et 5B (par souci de clarté des figures, les éléments de mesure 101, 102 ne sont pas représentés sur les figures 6A et 6B mais ils font aussi partie du dispositif).

L'articulation comporte alors deux éléments fibreux reliant chacun transversalement les extrémités des branches 2.2, 2.3 du segment 2 aux branches 4.2, 4.3 du segment 4 respectivement. Dans l'exemple représenté, le segment 2 présente une largeur inférieure à celle du segment 4, en particulier la largeur extérieure au niveau des branches 2.2, 2.3 du segment 4 est inférieure à la largeur intérieure entre les branches 4.2, 4.3 du U du segment 4 afin de permettre l'introduction du U du segment 2 dans le U du segment 4.

Les articulations présentées jusqu'à présent offrent un degré de liberté autour de l'axe YY'. Sur la figure 7, est représentée une articulation offrant plusieurs degrés de liberté.

Sur la figure 7 on peut voir un cardan réalisé à l'aide d'articulations selon la présente invention (par soucis de clarté, ici encore les éléments de mesure 101, 102 ne sont pas représentés sur la figure 7 mais ils sont partie intégrante du dispositif).

Le cardan selon la présente invention comporte un segment 2 disposé selon un premier plan P et comportant une extrémité 2.1 en forme de U, un deuxième segment 4 disposé selon un deuxième plan Q et comportant une extrémité 4.1 en forme de U.

Les plans P et Q étant orientés orthogonalement l'un par rapport à l'autre, les branches du U du deuxième segment sont disposées de manière sensiblement symétrique de part et d'autre du plan P.

Le cardan selon la présente invention comporte également un croisillon 12 muni d'une première branche 12.1 et d'une deuxième branche 12.2 orthogonales l'une par rapport à l'autre. Les extrémités de la branche 12.1 étant raccordées par des articulations selon la présente invention aux branches du U du premier segment 2 et les extrémités de la deuxième branche 12.2 étant reliées par des articulations selon la présente invention aux branches du U du deuxième segment 4. Les articulations peuvent être réalisées à l'aide d'un câble et d'un élément de mesure uniques qui sont fixé par exemple par moulage au croisillon et aux segments 2, 4 ou à l'aide de plusieurs brins de câbles liant chaque extrémité du croisillon aux segments 2 et 4.

Ainsi, le segment 2 peut se déplacer en rotation autour de l'axe YY' et le segment 4 peut se déplacer en rotation autour de l'axe ZZ'.

Il est bien entendu que les membres articulés représentés sur la figure 7 peuvent comporter plusieurs câbles, par exemple tressés.

En outre, il peut être prévu de remplacer les câbles par une plaque de matériau fibreux tissé ou non tissé enroulé de manière à former une articulation de forme allongée.

Le membre articulé selon la présente invention peut être actionné à l'aide d'un dispositif monté sur l'un des segments et provoquant la rotation de l'autre segment.

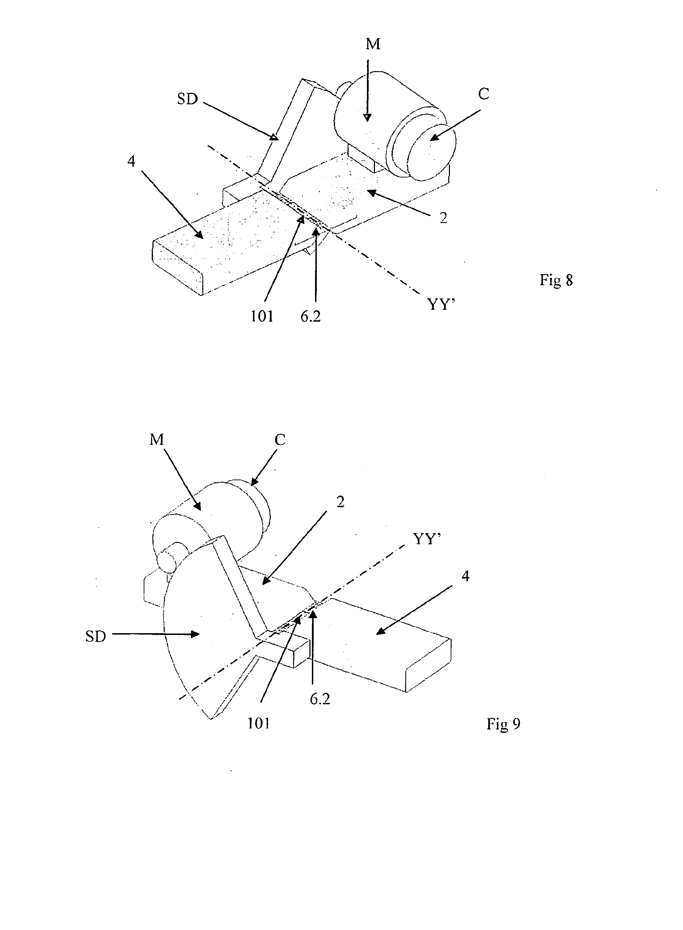

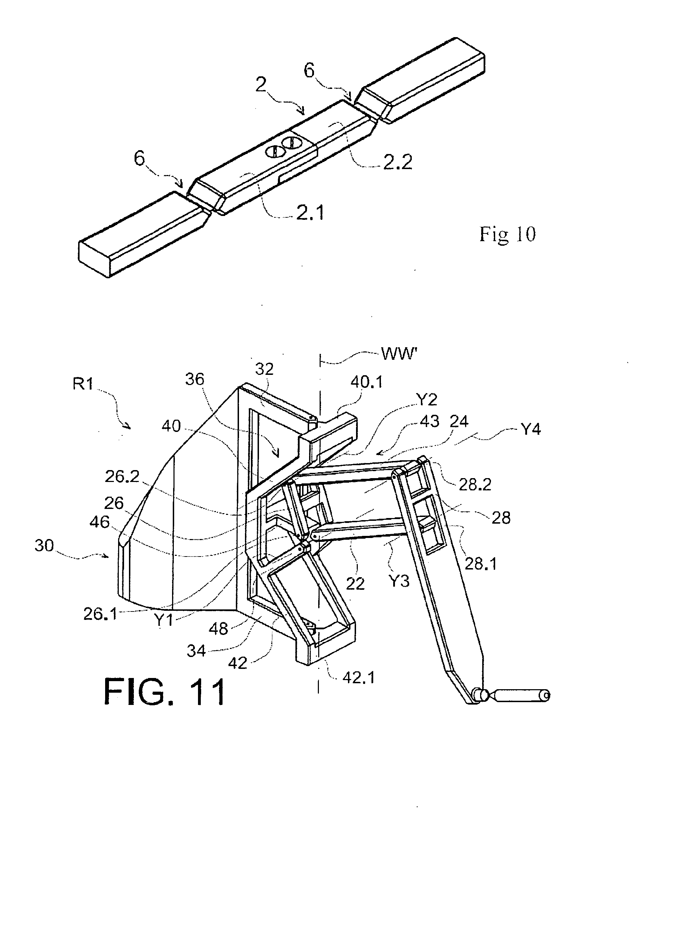

Sur les figures 9 et 10, on peut voir un tel exemple d'un dispositif d'actionnement d'un membre articulé selon la présente invention (sur ces figures, l'élément flexible est une nappe de matériau fibreux et l'élément de mesure est présent sous la forme d'un film polymère conducteur ou un film flexible muni de particules métalliques ou d'électrodes et dont la capacité ou la résistance varie en fonction de l'angle formé par l'articulation mais tout autre dispositif décrit précédemment pourrait être utilisé).

Dans l'exemple représenté, le segment 2 porte un moteur M pourvu d'un codeur C, en sortie de son axe de rotation une roue dentée engrenant un secteur denté SD solidaire en rotation du deuxième segment 4. Ainsi, la rotation du moteur provoque le déplacement autour de l'axe YY' du deuxième segment 4.

Dans l'exemple représenté, le secteur denté SD est fixé sur le côté du segment 4, ainsi il ne gêne pas l'articulation du segment 4 par rapport au segment 2, i.e. il ne réduit pas le débattement entre les deux segments rigides 2, 4.

On pourrait également prévoir pour actionner le bras articulé selon la présente invention un cabestan à câbles. Pour cela, une poulie primaire est fixée en sortie du moteur M et une poulie secondaire est fixée sur l'autre segment à la place du secteur denté SD. Un câble est fixé sur la poulie secondaire et enroulé sur la poulie primaire de sorte à ne pas glisser sur celle-ci. La rotation du moteur entraîne alors la poulie primaire, qui entraîne la poulie secondaire par l'intermédiaire du câble, et donc la rotation du segment 4 par rapport au segment 2.

Il est bien entendu que tout autre type d'actionneur peut être envisagé pour animer le membre articulé selon la présente invention, par exemple un actionneur linéaire, dont les extrémités seraient fixées chacune sur un segment ou un dispositif associant un moteur et un système à roue et vis sans fin. Cette solution convient bien sur à un robot en utilisant un capteur d'effort pour rendre le système transparent sur une interface haptique.

Le moteur lui-même peut être de tout type, en particulier un moteur à courant continu, un moteur brushless, un actionneur piézo-électrique ou un actionneur à base d'alliages à mémoire de forme. On peut aussi utiliser un moto réducteur. Sur une interface haptique, on peut également utiliser un dispositif de freinage pour s'opposer aux mouvements de l'utilisateur, en particulier un frein magnétique, un frein à poudre ou un dispositif utilisant des fluides magnéto rhéologiques ou électro rhéologiques.

De la même façon, le codeur peut être remplacé par tout autre type de capteur de position, en particulier un codeur optique, un capteur à effet hall ou un capteur magnéto optique. Par ailleurs, le capteur peut être placé sur le moteur, directement sur l'articulation ou être déporté. Il peut aussi être doublé en plaçant par exemple un capteur sur le moteur et un autre capteur sur l'articulation. Cette redondance apporte une plus grande fiabilité au dispositif.

Enfin, les éléments de mesure 101, 102 peuvent être remplacés par tout type de capteur intégré à l'articulation et permettant de mesurer sa rotation. On pourrait ainsi également utiliser une diode placée sur le segment 2 et une photodiode placée sur le segment 4 et reliées par une fibre optique, dont les pertes optiques augmentent avec le rayon de courbure. Ainsi, la lumière reçue par la photodiode serait fonction de la distance entre elle et la diode donc de l'angle entre les segments 2 et 4. De la même manière, on pourrait utiliser deux bobines déposées sur un film flexible 101 et fonctionnant comme des antennes dont le couplage inductif est fonction de l'angle entre les segments. On peut également utiliser des jauges de contraintes disposées sur une membrane souple dont la déformation entraine des efforts dans les jauges fonction de l'angle de l'articulation.

Dans tous les cas, l'association d'un élément de mesure absolue 101, 102 placé dans l'articulation en plus d'un codeur sur le moteur donnant une information relative (sur un tour moteur) permet une redondance de mesure favorable à la fiabilité du système et permet de s'affranchir d'une phase d'initialisation du système au démarrage, ce qui est très avantageux.

Dans la suite de la description, nous allons décrire des structures formées par l'association de membres articulés selon la présente invention.

Sur la figure 11, on peut voir un premier exemple d'un robot R1 mettant en oeuvre les membres articulés selon la présente invention.

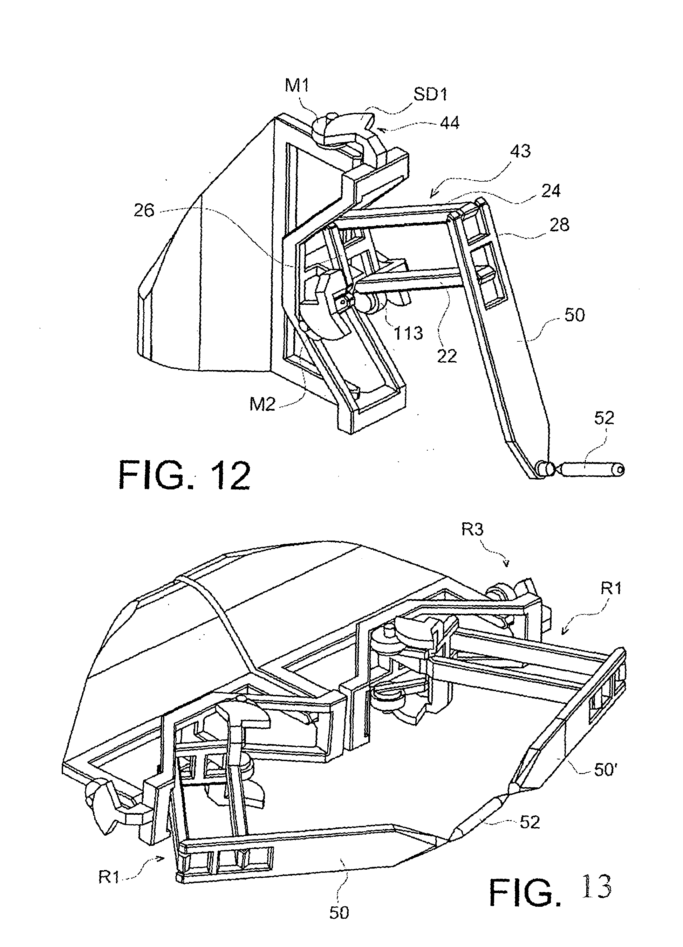

Le robot R1 comporte une base 30 munie de deux bras fixes 32, 34 parallèles aux extrémités desquelles est monté mobile un support 36 en rotation autour d'un axe WW', sensiblement vertical sur la figure 12.

Le support mobile 36 est relié aux bras fixes 32, 34 par une articulation double identique à celle représentée sur les figures 4A et 4B.

On notera qu'une articulation simple du type de celle présentée sur les figures 3A1 à 3A6 et 3B1 à 3B6 pourrait convenir, son doublement permettant toutefois d'augmenter sa résistance aux mouvements parasites (autres que la rotation autour de l'axe WW').

Le support mobile 36 a sensiblement la forme d'un V à fond plat relié à la base au niveau des extrémités 40.1, 42.1 des branches 40, 42 du V.

Le support mobile est actionné en rotation autour de l'axe WW' au moyen d'un actionneur 44 du type décrit précédemment en relation avec les figures 8 et 9. Dans l'exemple représenté, le moteur M1 est monté sur la base 30, son axe étant parallèle à l'axe WW' et sa roue dentée engrenant un secteur angulaire denté SD1 fixé sur l'extrémité 40.1 du support mobile 36.

La rotation de la roue dentée provoque un déplacement du secteur angulaire SD1 qui entraîne en rotation le support mobile 36 autour de l'axe WW'.

Toute autre solution d'entraînement conviendrait, en particulier une courroie, un câble (montage en cabestan) ou un galet d'entraînement par frottement.

Le robot R1 comporte également un parallélogramme articulé 43 entre les branches 40, 42 du V du support mobile 36.

Le parallélogramme comporte un bras 22, une bielle 24 disposée parallèlement au bras 22, et reliés par leurs extrémités par deux biellettes 26, 28 parallèles.

Dans l'exemple représenté, le bras 22 et la bielle 24 ont une forme de rectangle plein, et les biellettes ont, vue de face, une forme de H majuscule. Cette forme en H est illustrative et toute autre forme permettant des débattements suffisants conviendrait.

La biellette 26 est articulée par sa première extrémité 26.1 sur les extrémités de deux bras 48 solidaires de la branche 42 du support mobile 36, s'étendant sensiblement perpendiculairement à la branche 42. L'articulation entre la biellette 26 et les bras 48 est identique à celle des figures 4A et 4B.

La biellette 26 est articulée par sa deuxième extrémité 26.2 sur la bielle 24 au moyen d'une articulation similaire à celle des figures 5A et 5B. La biellette 26 est alors articulée en rotation autour d'un axe Y1 par rapport au support 36.

La biellette 26 est donc articulée sur le bras 22 et sur la bielle 24 par une première extrémité 26.1 et par une deuxième extrémité 26.2 respectivement. La biellette 26 est donc apte à pivoter autour d'un axe Y1 orthogonal à l'axe longitudinal du bras 22 au niveau de sa première extrémité 26.1, et autour d'un axe Y2 orthogonal à l'axe longitudinal de la bielle 24 au niveau de sa deuxième extrémité 26.2.

Le bras 22 est monté articulé, autour d'un axe confondu avec l'axe Y1, sur le support mobile 36 sur un bras 46 en saillie de la base du V entre les branches 40, 42 par une articulation du type de celle représentée sur les figures 3A1 à 3A6 et 3B1 à 3B6.

La biellette 28 est articulée sur le bras 22 et sur la bielle 24 au niveau de ses deux extrémités longitudinales 28.1, 28.2 au moyen d'une articulation du type de celle représentée sur les figures 5A et 5B.

La biellette 28 est donc articulée sur le bras 22 et sur la bielle 24 par une première extrémité 28.1 et par une deuxième extrémité 28.2 respectivement. La biellette 28 est donc apte à pivoter autour d'un axe Y3 orthogonal à l'axe longitudinal du bras 22 au niveau de sa première extrémité 28.1, et autour d'un axe Y4 orthogonal à l'axe longitudinal de la bielle 24 au niveau de sa deuxième extrémité 28.2.

Grâce à cette structure, la rotation de la biellette 26 ou de la biellette 28, provoque un déplacement de la bielle 24 parallèlement au bras 22.

Il est alors possible de réaliser le déplacement de grande précision d'objets liés à la biellette ou au bras.

La biellette 26 est déplacée au moyen d'un moteur M2 (figure 12) monté sur le support mobile 36 et une poulie P1 fixée sur les flancs de la biellette 26.

Le bras 22 est actionné au moyen d'un moteur M3 (figure 12) monté sur le support mobile 36 et une poulie P2 fixée sur les flancs du bras 22.

Les actionneurs peuvent associer des moteurs et des engrenages ou des réducteurs à cabestan ou tout autre moyen de transmission. Les moteurs peuvent également être placés sur la base 30 en utilisant des moyens de transmission appropriés.

La biellette 28 se prolonge dans l'exemple représenté vers le bas pour former un avant bras 50. Un élément 52 est monté articulé sur une extrémité libre 50.1 de l'avant bras avec une liaison rotule, réalisée par un câble noyé dans les corps adjacents.

La liaison entre l'élément 52 et l'avant bras 50 peut être de tout type, et pas nécessairement de type rotule.

On peut également envisager d'actionner l'élément 52. Cependant, dans ce cas, il serait plus avantageux de réaliser la liaison rotule à l'aide de trois liaisons pivot concourantes, ce qui offrirait une plus grande facilité de motorisation.

Les différents types d'articulation mis en oeuvre sont donnés à titre d'exemple et toute autre combinaison utilisant les articulations selon la présente invention peut être envisagée.

De la même façon, les formes des segments (en H, en V, ...) sont données à titre d'exemple. Tout autre type de forme de segment pourrait être utilisé. Le corps 36 en particulier a ici une forme de V de telle sorte que les axes WW' et Y1 soient concourants. Il pourrait être droit, auquel cas ces axes ne seraient pas nécessairement concourants.

L'élément 52 peut être une poignée dans le cas de systèmes haptiques, en particulier pour la téléopération dans la commande de robot à distance, ou un objet à déplacer.

Cette structure forme alors un robot à six degrés de liberté. Dans l'exemple représenté sur les figures 11 et 12, seules les rotations autour des axes WW', Y1 et Y2 sont actionnées au moyen d'actionneurs, mais comme décrit ci-dessus on peut également prévoir le déplacement de l'élément 52 par un actionneur.

Nous allons maintenant décrire le fonctionnement d'un tel robot en relation avec les figures 11 et 12.

La commande du moteur M1 provoque le déplacement du support mobile 36 autour de l'axe WW', la commande du moteur M2 provoque la rotation de la biellette 28 autour de l'axe Y1 par rapport au support mobile 36, et l'actionnement du moteur M3 provoque la rotation du bras 22 autour de l'axe Y1. Le parallélogramme 43 est alors déformé. L'avant bras 50, et donc l'élément 52 sont alors aptes à pivoter autour de l'axe Y3, à s'abaisser, à se relever, à avancer et à reculer grâce à la transmission du mouvement via le parallélogramme.

Dans un exemple de réalisation d'une interface haptique, le système comporte alors un robot R1 formant une interface, l'élément 52 étant une poignée manipulée par un opérateur, les actionneurs générant une contre-réaction significative des opérations d'un objet virtuel dans son environnement ou d'un robot de structure identique ou non à celle du robot R1, dans lequel l'élément 52 est un objet à déplacer.

Le terme robot générique sera utilisé à des fins de simplification pour désigner à la fois un robot et une interface haptique.

On peut envisager de réaliser toute la structure des figures 11 et 12 de manière monobloc en obtenant toutes les articulations lors du moulage. Cependant, on peut réaliser une structure démontable, dans ce cas tout ou partie des articulations peuvent être obtenues par assemblage suivant les figures 2A à 2D.

De manière avantageuse, afin de réaliser un assemblage plus simple, les articulations seront obtenues par moulage, ce qui permet de profiter de leur simplicité de réalisation et d'effectuer un assemblage mécanique, notamment par vis au niveau des segments des robots, tel que cela est représenté sur la figure 10 sur laquelle le segment 2 comporte des articulations 6 selon la présente invention à ses deux extrémités obtenues par moulage et le segment en lui-même est réalisé en deux parties 2.1, 2.2 solidarisées par vissage ou tout autre moyen de liaison.

Sur la figure 13, on peut voir un autre exemple de réalisation d'un robot R3 selon la présente invention offrant cinq degrés de liberté en effort, c'est-à-dire cinq degrés de liberté sur lesquels un effort peut être généré par les moteurs du robot.

Le robot R3 comporte deux robots R1 mis tête-bêche, chacune des extrémités des avants bras 50, 50' étant articulée sur chacune des extrémités d'un élément commun 52 au moyen d'une liaison rotule réalisée par un câble noyé dans les corps adjacents.

L'élément 52 peut être une poignée d'un système haptique ou un élément à déplacer.

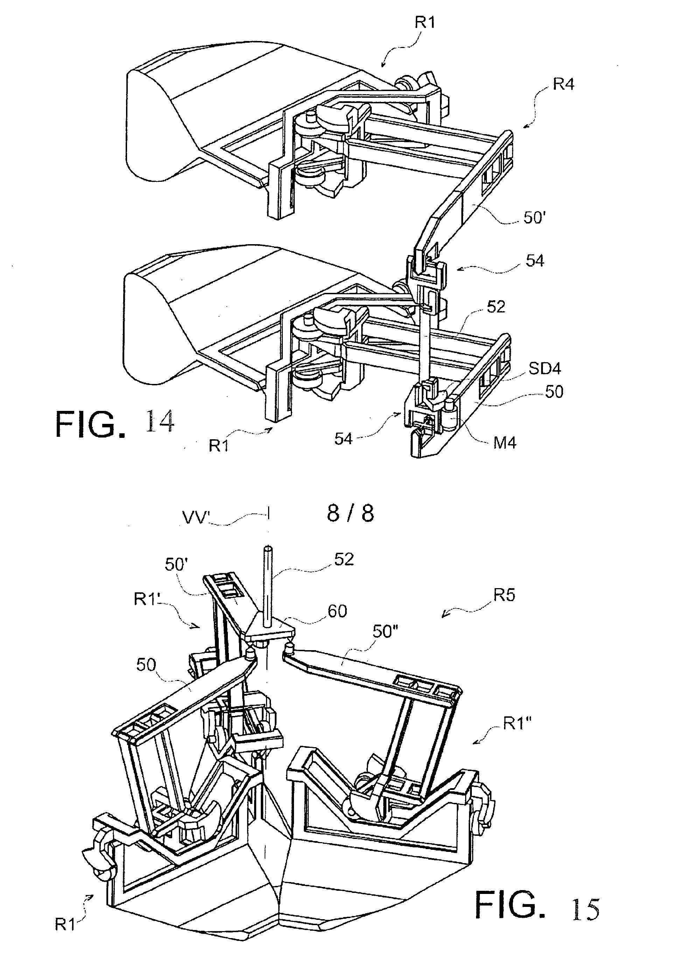

Sur la figure 14, le robot R4 comporte deux robots R1 disposés en parallèle, un robot R1' étant disposé au dessus d'un robot R1.

L'élément 52 est, dans l'exemple représenté articulé sur chacun des avant bras 50, 50' par une articulation de type cardan 54 telle que celle représentée sur la figure 7 associée en série avec une articulation de rotation telle que celle présentée sur les figures 3A1 à 3A6 et 3B1 à 3B6.

Par ailleurs, un actionneur 58 de l'élément 52 est prévu, le moteur M4 étant porté par la pièce d'extrémité du cardan 54 et le secteur angulaire SD4 étant solidaire de l'élément 52.

Le robot R4 selon la figure 14 offre six degrés de liberté en effort, ce qui est particulièrement avantageux lorsque l'élément 52 est une poignée. En effet, dans le cas du robot R3, la poignée est liée à l'avant bras de chaque sous structure par une rotule composite et la poignée n'est pas actionnable avec les six moteurs du robot, la structure tête bêche n'ayant que 5 degrés de liberté en effort.

On peut également envisager de relier l'élément 52 à l'avant bras 50 au moyen d'au moins une sous structure à trois liaisons pivot concourantes.

Dans les exemples des robots R3 et R4, l'élément 52 est lié aux deux sous structures par le même type de liaisons (rotule ou ensemble cardan pivot). Il est bien sûr possible d'utiliser un type de liaison entre le robot R1 et l'élément 52 et un autre type de liaison entre le robot R1' et l'élément 52.

Sur la figure 15, on peut voir un autre exemple de réalisation d'un robot R5 offrant six degrés de liberté.

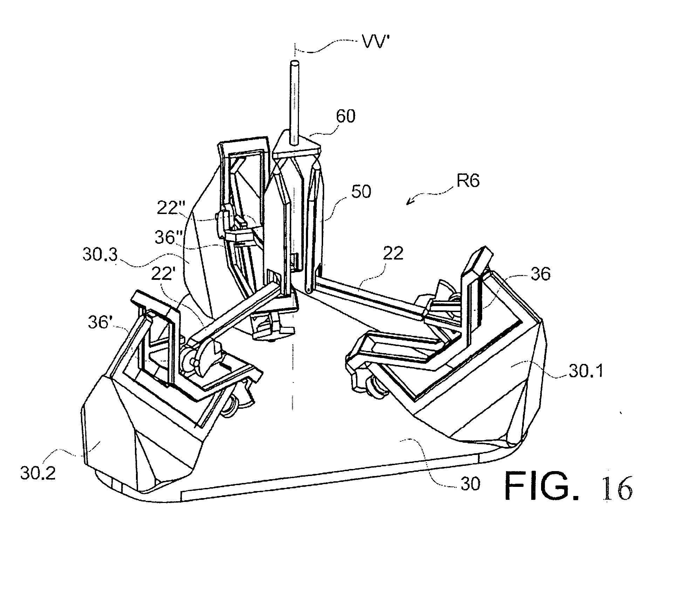

Comme on peut le voir sur la figure 16, le robot R5 comporte trois robots R1, R1', R1'' disposés régulièrement autour de l'axe VV', une plateforme 60 supportant l'élément 52 étant montée par des liaisons rotules réalisées par un câble noyé dans les corps adjacents sur les extrémités des avant bras 50, 50', 50''.

Sur la figure 15, les trois axes de chaque robot R1, R1', R1'' sont actionnés. Cette redondance permet d'éloigner les singularités du centre de l'espace de travail comme il est bien connu de l'homme de l'art.

On peut également prévoir de n'actionner que deux axes de chaque robot. En général, ce sont les articulations du parallélogramme, qui sont actionnées.

Sur la figure 16, on peut voir un robot R6 proche du robot R5, dans lequel la structure en parallélogramme a été supprimée, ce qui permet de simplifier la réalisation d'un tel robot.

Le robot R6 comporte une base commune 30 comprenant trois sous structures 30.1, 30.2 et 30.3 disposées régulièrement autour de l'axe VV'. Trois supports 36, 36', 36" sont mobiles par rapport aux structures 30.1, 30.2 et 30.3 respectivement grâce à des articulations du type de celles illustrées par les figures 4A et 4B. Ces articulations sont actionnées par des actionneurs. Chaque support mobile 36, 36', 36" porte un bras 22, 22', 22'' mobile en rotation sur le support mobile 36, 36', 36'' par une articulation actionnée par un actionneur du type de celle des figures 3A1 à 3A6 et 3B1 à 3B6, et un avant bras 50 mobile en rotation sur le bras 22, par une articulation du type de celle représentée sur les figures 5A à 5C.

Les avant bras 50, 50', 50'' sont reliées à une plateforme 60 supportant l'élément 52 par des liaisons rotules réalisées par un câble noyé dans les corps adjacents

Les bras 22, 22', 22" sont actionnés respectivement par un actionneur tel que décrit précédemment.

Ces réalisations ne sont données qu'à titre d'exemple et il est possible d'utiliser des liaisons composites sur de nombreux autres systèmes comme par exemple des interfaces portables pour les doigts, la main ou le poignet, de type exosquelettes, telles que celles décrites dans le document FR 2 863 535.

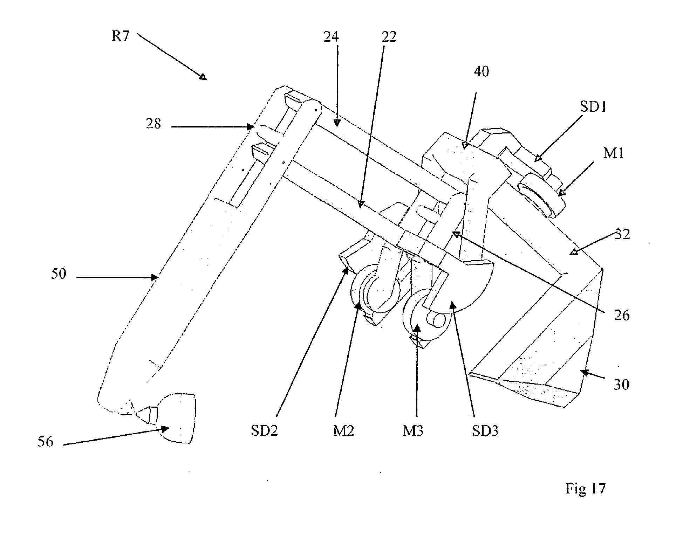

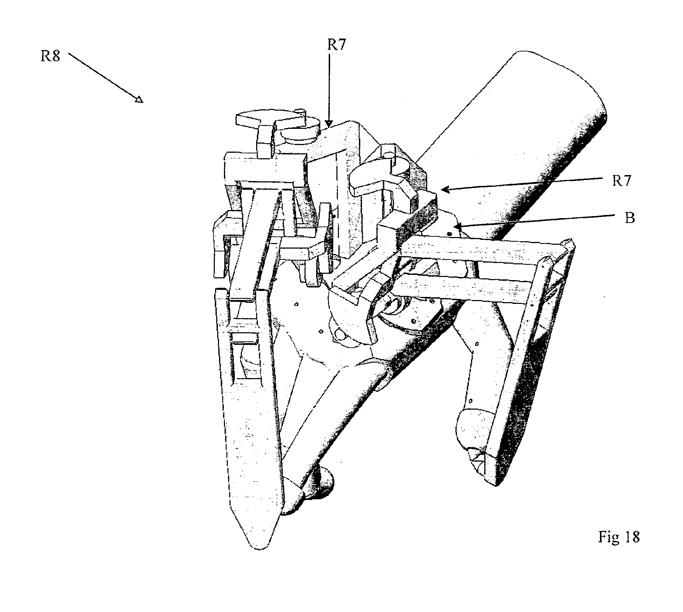

La figure 18 représente un tel dispositif. Cette interface portable R8 est constituée de deux robots R7 du type de celui représenté sur la figure 17 fixés sur une base commune B elle-même destinée à être fixée sur la main par l'intermédiaire de lanières, de sangles, ou tout autre dispositif de fixation approprié tel que ceux communément rencontrés sur les atèles médicales. De tels dispositifs sont connus de l'homme de l'art et ne seront pas détaillés ici. Par souci de lisibilité, ils ne sont pas représentés sur la figure 18. Cette interface peut être montée sur un robot porteur non représenté. Elle peut également être utilisée de manière autonome. On utilisera alors en général un système de capture de mouvement 6D pour mesurer ses mouvements dans l'espace et commander le retour d'effort en conséquence. Un tel dispositif demande en général que la poignée soit équipée de billes rétro-réfléchissantes dont la position est mesurée dans l'espace par au moins 2 caméras. Ce type de dispositif est également connu de l'homme de l'art et ne sera ni détaillé ni représenté ici. Le robot R8 permet un retour d'effort au bout du pouce et de l'index. Il serait bien sur possible d'assurer un retour d'effort sur le bout des autres doigts en rajoutant d'autres robots de type R7 sur la base B sans sortir du cadre de l'invention.

La figure 17 représente un robot tel que ceux utilisés sur la figure 18. Ce robot R7 est semblable au robot R2 représentés sur les figures 12. Il diffère de ce dernier essentiellement en ce que l'organe de saisie est ici un dé 56 dans lequel on vient insérer le doigt. Le dé 56 est représenté fixe mais il pourrait être réglable comme cela est présenté dans le document FR 2 863 535. De la même façon, le dé est lié ici au segment 50 par un câble servant de rotule. On pourrait utiliser également 3 liaisons pivot concourantes. Le point de concours de liaisons pivot serait alors idéalement situé au centre de la phalange distale du doigt. Le robot R7 diffère également du robot R2 en ce que la base 30 est pourvue d'un seul bras fixe 32. Le support mobile n'est également pourvu que d'une branche 40. Les autres caractéristiques du robot R7 sont les mêmes que celles du robot R2.

Les articulations composites selon la présente invention s'appliquent principalement dans le domaine de la robotique et pour les interfaces sensorielles.

Nous avons bien réalisé un membre articulé et instrumenté dont l'articulation présente une faible résistance au mouvement du fait de l'utilisation de matériaux fibreux offrant une grande résistance avec une épaisseur réduite et des éléments de mesure de faible épaisseur. Le débattement des segments de l'articulation est également accru, ainsi que sa solidité.

De plus l'accrochage du matériau fibreux à l'intérieur des segments rigides, et non à l'extérieur permet d'améliorer la transparence au mouvement, c'est-à-dire la réduction d'un effort résistant. En outre, ceci permet d'augmenter le débattement puisque les extrémités des segments sont affinées par rapport à deux segments munis d'une articulation montée autour des extrémités des segments.

Par ailleurs, la réalisation de telles articulations est très simplifiée, notamment dans le cas d'une fabrication par moulage, par ailleurs le coût de revient peut en être fortement réduit du fait de la simplicité de réalisation et du choix des matériaux.

Un autre avantage de ce type de structure est de permettre de réduire considérablement le temps de montage, d'ajustement et de maintenance, comparé aux articulations nécessitant l'assemblage de pièces de précision.

Enfin, ce type de liaison offre de nombreux avantages du fait de l'intégration d'un élément de mesure dans les articulations, qu'elles soient actives ou passives : il permet la mesure absolue des déplacements permettant d'éviter les phases d'initialisation, la mesure des articulations passives permettant de simplifier les modèles de robots parallèles, et une mesure redondante avec celle des capteurs associés aux moteurs permettant une plus grande fiabilité.

Ce type de liaison peut être utilisé pour réaliser des liaisons simples, ayant un seul degré de liberté ou multiples, ayant plusieurs degrés de liberté. Ces liaisons peuvent par ailleurs être passives ou actives (motorisées). Enfin, elles peuvent être utilisées pour réaliser des robots complets, des structures portables de type exosquelettes.

## Revendications

1. Membre articulé pour robot ou interface haptique comportant au moins des premier (2) et deuxième (4) segments rigides et une articulation (6), ladite articulation (6) comportant des fibres et étant fixée dans chacun des segments rigides (2, 4), les fibres étant par exemple en aramide, en kevlar ou en polypropylène, **caractérisé en ce que** l'articulation comporte également au moins un élément de mesure (101, 102).

2. Membre articulé selon la revendication précédente, comportant au moins deux câbles (6.1), parallèles entre eux, dont une plus grande dimension est orthogonale à l'axe de rotation (YY') de l'articulation (6), les câbles (6.1) étant sollicités en flexion.

3. Membre articulé selon la revendication 1, dans lequel l'articulation (6) comporte une nappe de fibres, ladite nappe comportant par exemple des fibres tissées.

4. Membre articulé selon la revendication 1, dans lequel l'articulation (6) est du type à cardan, comportant un croisillon (12) dont les extrémités d'une première branche (12.1) sont articulées au moyen d'un câble sur deux branches de premier segment (2) et dont les extrémités d'une deuxième branche (12.2) sont articulées au moyen d'un câble sur deux branches du deuxième segment (4).

5. Membre articulé selon la revendication 1, dans lequel l'articulation (6) comporte un câble dont une plus grande dimension du câble s'étend le long de l'axe de rotation (YY') de l'articulation, le câble étant sollicité en torsion.

6. Membre articulé selon l'une quelconque des revendications précédentes, dans lequel l'élément de mesure se présente sous la forme d'un film mince (101) dont une caractéristique électrique varie en fonction de sa déformation.

7. Membre articulé selon la revendication 6, dans lequel l'élément de mesure (101) est un film souple muni sur ses faces supérieure et inférieure d'électrodes et dont la capacité varie en fonction de sa déformation ou un film souple muni sur ses faces supérieure et inférieure d'électrodes et dont la résistance varie en fonction de sa déformation, ou un film souple équipé de jauges de contrainte dont la sollicitation varie en fonction de sa déformation.

8. Membre articulé selon la revendication 6, dans lequel l'élément de mesure (101) est un polymère conducteur dont la résistance varie en fonction de sa déformation.

9. Membre articulé selon l'une quelconque des revendications 1 à 5, dans lequel l'élément de mesure se présente sous la forme d'un ou plusieurs fils ou câbles ou fibres (102) dont une caractéristique électrique, telle que la capacité ou la résistance, varie en fonction de sa déformation donc de l'angle entre les segments (2,4) liés par l'articulation.

10. Membre articulé selon la revendication 1 à 5, dans lequel l'élément de mesure (102) est une fibre optique associée à un émetteur et un récepteur de lumière et dont la capacité à transmettre la lumière varie en fonction de sa déformation donc de l'angle entre les segments (2,4) liés par l'articulation, ou l'élément de mesure se présente sous la forme d'une ou plusieurs antennes placées dans la structure du film liant les segments (2,4) et dont le couplage inductif varie en fonction de l'angle entre les segments (2,4) liés par l'articulation.

11. Membre selon l'une quelconque des revendications 1 à 10, dans lequel les extrémités de l'articulation noyées dans la matière comportent des boucles à travers lesquelles la matière passe, avantageusement des axes traversent les boucles et sont également noyés dans la matière.

12. Membre articulé selon l'une quelconque des revendications précédentes, comportant des moyens d'actionnement (M) d'un des segments (2, 4) par rapport à l'autre (4, 2).

13. Robot ou interface haptique comportant au moins un membre articulé selon l'une quelconque des revendications 1 à 12.

14. Structure articulée comportant une base (30) munie d'un ou de deux bras (32, 34), un support mobile (36) monté articulé sur la base (30), le support mobile (36) formant avec la base (30) un membre articulé selon l'une quelconque des revendications 1 à 12, un parallélogramme (43) articulé comportant un bras (22), une bielle (24) parallèle au bras (22) et des première (26) et deuxième (28) biellettes parallèles, le bras (22) étant articulé sur le support mobile (36), le bras (22) et le support mobile (36) formant un membre articulé selon l'une quelconque des revendications 1 à 12, la première biellette (26) étant articulée sur le support mobile (36) ou sur le bras (22) et sur la bielle (24), le support (36) ou le bras (22) et la première biellette (26), la bielle (24) et la première biellette (26) formant respectivement des membres articulés selon l'une des revendications 1 à 12 et la deuxième biellette (28) étant articulée sur la bielle (24) et sur le bras (22), la deuxième biellette (28) et le bras (22) formant un membre articulé selon l'une quelconque des revendications 1 à 12 et la deuxième biellette (28) et la bielle (24) formant un membre articulé selon l'une quelconque des revendications 1 à 12, la deuxième biellette (28) se prolongeant de manière à former un avant bras (50) de manoeuvre.

15. Robot ou interface haptique comportant au moins deux structures selon la revendication 14, placés sur une embase commune (B) disposée sur la main.

16. Robot ou interface haptique comportant deux structures selon la revendication 14, disposées tête-bêche, de manière à ce que les extrémités libres des deux avant bras (50, 50') de manoeuvre soient en vis-à-vis, lesdits avant bras (50, 50') étant chacune articulés sur un élément de manoeuvre (52) au moyen d'une liaison rotule réalisée par un câble noyé dans les corps adjacents.

17. Robot ou interface haptique comportant deux structures selon la revendication 14, disposées l'une au dessus de l'autre, les extrémités libres des deux avant bras (50, 50') de manoeuvre étant articulés sur un élément de manoeuvre (52) formant un membre articulé selon revendication 5.

18. Robot ou interface haptique comportant trois structures selon la revendication 14, réparties angulairement autour d'un axe de manière régulière, les extrémités des avant bras (50, 50', 50'') étant toutes orientées d'un même côté et portant une plateforme (60) portant un élément de manoeuvre (52).

19. Robot comportant une base (30), sur laquelle sont disposés de manière mobile trois supports (36, 36', 36") aptes à tourner autour de trois axes angulairement de manière régulière, chaque support (36, 36', 36") formant avec la base (30) un membre articulé selon l'une quelconque des revendications 1 à 12, ledit robot comportant trois premiers segments (22, 22', 22") articulés sur les supports mobiles (36, 36', 36"), formant avec ceux-ci des membres articulés selon l'une quelconque des revendications 1 à 12, trois deuxièmes segments (50, 50', 50'') articulés par une première extrémité respectivement sur les trois premiers segments (22, 22', 22"), lesdits deuxièmes segments (50, 50', 50") formant avec lesdits premiers segments (22, 22', 22") des membres articulés selon l'une quelconque des revendications 1 à 12, lesdits deuxièmes segments portant à leur deuxième extrémité une plateforme (60) portant un élément de manoeuvre (52).

20. Robot ou interface haptique selon l'une des revendications 16 à 19, **caractérisé en ce que** l'élément de manoeuvre est un stylo (52) ou un dé (56) destiné à recevoir l'extrémité d'un doigt.

## Claims

1. A jointed limb for robot or haptic interface comprising at least first (2) and second (4) rigid segments and a joint (6), said joint (6) comprising fibers and being fixed in each of the rigid segments (2, 4), the fibers being for example in aramid fiber, Kevlar or polypropylene **characterized in that** the joint comprises at least one measurement element (101, 102)

2. The jointed limb according to the preceding claim, comprising at least two cables (6.1), parallel to each other, whereof a larger dimension is orthogonal to the axis of rotation (YY') of the joint (6), the cables (6.1) being made to bend.

3. The jointed limb according to claim 1, in which the joint (6) comprises a layer of fibers, for example woven fibers.

4. The jointed limb according to claim 1, in which the joint (6) is of the universal type, comprising a journal cross (12) whereof the ends of a first branch (12.1) are jointed using a cable on two branches of the first segment (2) and whereof the ends of a second branch (12.2) are jointed using a cable on two branches of the second segment (4).

5. The jointed limb according to claim 1, in which the joint (6) comprises a cable whereof one larger dimension of the cable extends along the axis of rotation (YY') of the joint, the cable being solicited in torsion.

6. The jointed limb according to any one of the preceding claims, in which the measurement element is in the form of a thin film (101) whereof one electric characteristic varies according to its deformation.

7. The jointed limb according to claim 6, in which the measurement element (101) is a flexible film provided on its upper and lower faces with electrodes and the capacity of which varies according to its deformation or a flexible film provided on its upper and lower faces with electrodes and the resistance of which varies according to its deformation.

8. The jointed limb according to claim 6, in which the measurement element (101) is a flexible film equipped with stress gauges whereof the resistance varies according to its deformation.

9. The jointed limb according to any one of claims 1 to 5, in which the measurement element is in the form of one or several wires or cables or fibers (102) whereof one electric characteristic such as the capacity or the resistance, varies according to its deformation therefore the angle between the segments (2, 4) connected by the joint.

10. The jointed limb according to claim 1 to 5, in which the measurement element (102) is an optical fiber connected to a light transmitter and receiver and whereof the capacity to transmit the light varies according to its deformation therefore the angle between the segments (2, 4) connected by the joint or the measurement element (101) is in the form of one or several antennae placed in the structure of the film connecting the segments (2,4) and whereof the inductive coupling varies according to the angle between the segments (2,4) connected by the joint.

11. The limb according to any one of claims 1 to 10, in which the ends of the joint submerged in the material comprise loops through which the material passes, in advantageous manner axes go through the loops and are also submerged in the material.

12. The jointed limb according to any one of the preceding claims, comprising actuation means (M) for one of the segments (2, 4) relative to the other (4, 2).

13. A robot or haptic interface comprising at least one jointed limb according to any one of claims 1 to 12.

14. A jointed structure comprising a base (30) provided with one or two arms (32, 34), a mobile support (36) mounted jointed on the base (30), the mobile support (36) forming a jointed limb according to any one of the claims 1 à 12 with the base (30), a jointed parallelogram (43) comprising an arm (22), a connecting rod (24) parallel to the arm (22) and first (26) and second (28) parallel small connecting rods, the arm (22) being jointed on the mobile support (36), the arm (22) and the mobile support (36) forming a jointed limb according to any one of the claims 1 à 12, the first small connecting rod (26) being jointed on the mobile support (36) or the arm (22) and the first connecting rod (24), the support (36) or the arm (22) and the first small connecting rod (26), the connecting rod (24) and the first small connecting rod (26) respectively forming jointed limbs according to one of the claims 1 à 12 and the second small connecting rod (28) being jointed on the connecting rod (24) and on the arm (22), the second small connecting rod (28) and the arm (22) forming a jointed limb according to any one of the claims 1 à 12 and the second small connecting rod (28) and the connecting rod (24) forming a jointed limb according to any one of the claims 1 à 12, the second small connecting rod (28) extending itself so as to form a operation forearm (50).

15. A robot or haptic interface comprising at least two structures according to claim 14, placed on a shared base (B) arranged on the hand.

16. A robot or haptic interface comprising two structures according to claim 14, arranged head to tail, such that the free ends of the two operation forearms (50, 50') are facing each other, said forearms (50, 50') each being jointed on a operation element (52) using a ball connection realized by a cable submerged in the adjacent bodies.

17. A robot or haptic interface comprising two structures according to claim 14, arranged one on top of the other, the free ends of the two operation forearms (50, 50') being jointed on a operation element (52) forming a jointed limb according to claim 5.

18. A robot or haptic interface comprising three structures according to claim 14, regularly distributed angularly around an axis, the ends of the forearms (50, 50', 50'') all being oriented from a same side and supporting a platform (60) supporting a operation element (52).

19. A robot comprising a base (30), on which are arranged, mobile, three supports (36, 36', 36'') able to turn around three axes angularly, regularly, each support (36, 36', 36'') forming, with the base (30), a jointed limb according to any one of claims 1 to 12, said robot comprising three first segments (22, 22', 22'') jointed on the mobile supports (36, 36', 36"), forming with them jointed limbs according to any one of claims 1 to 12, three second segments (50, 50', 50'') jointed by a first end respectively on the three first segments (22, 22', 22''), said second segments (50, 50', 50'') forming, with said first segments (22, 22', 22"), jointed limbs according to any one of claims 1 to 12, said second segments supporting, at their second end, a platform (60) supporting a operation element (52).

20. The robot or haptic interface according to one of claims 16 to 19, **characterized in that** the operation element is a stylus (52) or a thimble (56) designed to receive the end of a finger.

## Patentansprüche

1. Gelenkglied für Roboter oder haptische Schnittstelle mit wenigstens einem ersten (2) und zweiten (4) steifen Segment und einem Gelenk (6), wobei das genannte Gelenk (6) Fasern umfasst und in jedem der steifen Elemente (2, 4) befestigt ist, und die Fasern zum Beispiel aus Aramid, Kevlar oder Polypropylen sind,
**dadurch gekennzeichnet, dass** das Gelenk auch ein Messelement (101, 102) umfasst.

2. Gelenkglied nach dem vorangehenden Anspruch, mit wenigstens zwei zueinander parallelen Kabeln (6.1), deren größere Dimension rechtwinklig zu der Rotationsachse (YY') des Gelenks (6) ist, wobei die Kabel (6.1) auf Biegung beansprucht werden.

3. Gelenkglied nach Anspruch 1, bei dem das Gelenk (6) eine Fasernlage umfasst, wobei die Fasernlage zum Beispiel gewebte Fasern umfasst.

4. Gelenkglied nach Anspruch 1, bei dem das Gelenk (6) vom kardanischen Typ ist, mit einem Gelenkkreuz, von dem die Enden eines ersten Zweigs (12.1) mittels eines Kabels an zwei Zweigen des ersten Segments (2) angelenkt sind, und dessen Enden eines zweiten Zweigs (12.2) mittels eines Kabels an zwei Zweigen des ersten Segments (4) angelenkt sind.

5. Gelenkglied nach Anspruch 1, bei dem das Gelenk (6) ein Kabel umfasst, wobei sich eine größere Abmessung des Kabels längs der Rotationsachse (YY') des Gelenks erstreckt und das Kabel auf Torsion beansprucht wird.

6. Gelenkglied nach einem der vorangehenden Ansprüche, bei dem das Messelement sich in Form eines Dünnfilms (101) präsentiert, bei dem eine elektrische Charakteristik in Abhängigkeit von seiner Verformung variiert.

7. Gelenkglied nach Anspruch 6, bei dem das Messelement (101) ein biegsamer, auf seiner Ober- und Unterseite mit Elektroden versehener Film ist, dessen Kapazität in Abhängigkeit von seiner Verformung variiert, oder ein biegsamer, auf seiner Ober- und Unterseite mit Elektroden versehener Film ist, dessen Widerstand in Abhängigkeit von seiner Verformung variiert, oder ein mit Dehnungsmessstreifen versehener Film ist, dessen Beanspruchung in Abhängigkeit von seiner Verformung variiert.

8. Gelenkglied nach Anspruch 6, bei dem das Messelement (101) ein leitfähiges Polymer ist, dessen Widerstand in Abhängigkeit von seiner Verformung variiert.

9. Gelenkglied nach einem der Ansprüche 1 bis 5, bei dem das Messelement sich in Form von Draht oder Drähten, Kabel oder Kabeln, Faser oder Fasern (102) präsentiert, bei denen eine elektrische Charakteristik wie etwa die Kapazität oder der Widerstand in Abhängigkeit von seiner Verformung variiert, also von dem Winkel zwischen den durch das Gelenk verbundenen Segmenten (2, 4).

10. Gelenkglied nach Anspruch 1 bis 5, bei dem das Messelement (102) eine mit einem Lichtsender und -empfänger verbundene optische Faser ist und dessen Lichtübertragungskapazität in Abhängigkeit von seiner Verformung variiert, also von dem Winkel zwischen den durch das Gelenk verbundenen Segmenten (2, 4), oder das Messelement sich in Form von einer Antenne oder mehreren Antennen präsentiert, enthalten in der Struktur des die Segmente (2, 4) verbindenden Films, deren induktive Kopplung in Abhängigkeit von dem Winkel zwischen den durch das Gelenk verbundenen Segmenten (2, 4) variiert.

11. Gelenkglied nach einem der Ansprüche 1 bis 10, bei dem die in das Material eingebetteten Enden des Gelenks Schleifen umfassen, durch die hindurch das Material passiert bzw. fließt, wobei vorteilhafterweise Achsen die Schleifen durchqueren und ebenfalls in das Material eingebettet sind.

12. Gelenkglied nach einem der vorangehenden Ansprüche mit Antriebseinrichtungen (M) eines der Segmente (2, 4) in Bezug auf das andere (4, 2).

13. Roboter oder haptische Schnittstelle mit wenigstens einem Gelenkglied nach einem der Ansprüche 1 bis 12.

14. Gelenkstruktur mit einer Basis (30), umfassend: einen oder zwei Arme (32, 34), einen an der Basis (30) angelenkten beweglichen Träger (36), wobei der bewegliche Träger (36) mit der Basis (30) ein Gelenkglied nach einem der Ansprüche 1 bis 12 bildet, ein gelenkiges Parallelogramm (43) mit einem Arm (22), eine zum Arm (22) parallele Gelenkstange (24) und parallele erste (26) und zweite (28) Stangen, wobei der Arm (22) an dem beweglichen Träger (36) angelenkt ist, der Arm (22) und der bewegliche Träger (36) ein Gelenkglied nach einem der Ansprüche 1 bis 12 bilden, die erste Stange (26) an dem beweglichen Träger (36) oder dem Arm (22) und an der Gelenkstange (24) angelenkt ist, der Träger (36) oder der Arm (22) und die erste Stange (26) jeweils Gelenkglieder nach einem der Ansprüche 1 bis 12 bilden, und die zweite Stange (28) an der Gelenkstange (24) und an dem Arm (22) angelenkt ist, die zweite Stange (28) und der Arm (22) ein Gelenkglied nach einem der Ansprüche 1 bis 12 bilden und die zweite Stange (28) und die Gelenkstange (24) ein Gelenkglied nach einem der Ansprüche 1 bis 12 bilden, die zweite Stange (28) sich derartig verlängert, dass sie einen Betätigungs-Vorderarm (50) bildet.

15. Roboter oder haptische Schnittstelle mit wenigstens zwei Strukturen nach Anspruch 14, angeordnet auf einem auf der Hand angeordneten gemeinsamen Unterteil (B).

16. Roboter oder haptische Schnittstelle mit zwei Strukturen nach Anspruch 14, entgegengesetzt angeordnet, so dass sich die freien Enden der beiden Betätigungs-Vorderarme (50, 50') vis-a-vis befinden, wobei jeder der genannten Vorderarme (50, 50') mit Hilfe einer Kugel- bzw. Rotationsgelenkverbindung an einem Betätigungselement (52) angelenkt ist, realisiert durch ein in die benachbarten Körper eingebettetes Kabel.

17. Roboter oder haptische Schnittstelle mit zwei Strukturen nach Anspruch 14, übereinander angeordnet, wobei die freien Enden der beiden Betätigungs-Vorderarme (50, 50') an einem Betätigungselement (52) angelenkt sind, das ein Gelenkglied nach Anspruch 5 bildet.

18. Roboter oder haptische Schnittstelle mit drei Strukturen nach Anspruch 14, winkelmäßig gleichmäßig um eine Achse herum verteilt, wobei die Enden der Vorderarme (50, 50', 50") alle nach einer selben Seite orientiert sind und eine ein Betätigungselement (52) tragende Plattform (60) tragen.

19. Roboter mit einer Basis (30), auf der drei Träger (36, 36', 36") beweglich angeordnet sind, drehbar um drei winkelmäßig gleichmäßige Achsen, wobei jeder Träger (36, 36', 36") mit der Basis (30) ein Gelenkglied nach einem der Ansprüche 1 bis 12 bildet, der genannte Roboter drei erste Segmente (22, 22', 22") umfasst, angelenkt an den beweglichen Trägern (36, 36', 36"), mit diesen Gelenkglieder nach einem der Ansprüche 1 bis 12 bildend, drei zweite Segmente (50, 50', 50"), mit einem ersten Ende jeweils angelenkt an den drei ersten Segmenten (22, 22', 22"), wobei die genannten zweiten Segmente (50, 50', 50") mit den genannten ersten Segmenten (22, 22', 22") Gelenkglieder nach einem der Ansprüche 1 bis 12 bilden, die genannten zweiten Segmente an ihren beiden Enden eine ein Betätigungselement (52) tragende Plattform (60) tragen.

20. Roboter oder haptische Schnittstelle nach einem der Ansprüche 16 bis 19, **dadurch gekennzeichnet, dass** das Betätigungselement ein Kugelschreiber bzw. Schreibstift (52) oder ein fingerhutartiges Element (56) zur Aufnahme einer Fingerspitze ist.
